(19) Europäisches Patentamt / European Patent Office / Office européen des brevets

(11) **EP 4 192 645 B1**

(12) **EUROPÄISCHE PATENTSCHRIFT**

(45) Veröffentlichungstag und Bekanntmachung des Hinweises auf die Patenterteilung:
**12.03.2025 Patentblatt 2025/11**

(21) Anmeldenummer: **21755424.5**

(22) Anmeldetag: **02.08.2021**

(51) Internationale Patentklassifikation (IPC):
**B23K 26/08** *(2014.01)* **B23K 26/38** *(2014.01)*
**B23K 26/70** *(2014.01)* **B23K 37/02** *(2006.01)*
**B23K 37/04** *(2006.01)* **G05B 19/404** *(2006.01)*

(52) Gemeinsame Patentklassifikation (CPC):
**B23K 26/38; B23K 26/0876; B23K 26/702; B23K 37/0235; B23K 37/0408**

(86) Internationale Anmeldenummer:
**PCT/EP2021/071593**

(87) Internationale Veröffentlichungsnummer:
**WO 2022/029091 (10.02.2022 Gazette 2022/06)**

(54) **VERFAHREN UND FLACHBETTWERKZEUGMASCHINE ZUM ERFASSEN EINER EINHÄNGEPOSITION EINES AUFLAGESTEGS**

METHOD AND FLAT BED MACHINE TOOL FOR DETECTING A FITTING POSITION OF A SUPPORTING BAR

PROCÉDÉ ET MACHINE-OUTIL À BANC PLAT POUR DÉTECTER UNE POSITION DE SUSPENSION D'UNE ENTRETOISE D'APPUI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2020 DE 102020120887**

(43) Veröffentlichungstag der Anmeldung:
**14.06.2023 Patentblatt 2023/24**

(73) Patentinhaber: **TRUMPF Werkzeugmaschinen SE + Co. KG**
**71254 Ditzingen (DE)**

(72) Erfinder: **STRUCKMEIER, Frederick**
**71229 Leonberg (DE)**

(74) Vertreter: **Trumpf Patentabteilung**
**Trumpf SE + Co. KG**
**TH550 Patente und Lizenzen**
**Johann-Maus-Straße 2**
**71254 Ditzingen (DE)**

(56) Entgegenhaltungen:
EP-A1- 3 338 946   WO-A1-2021/215429
CN-U- 204 867 817   DE-A1- 10 115 502
DE-U1- 202020 101 810   US-A1- 2010 064 870

• STRUCKMEIER FREDERICK ET AL: "Measuring the supporting slats of laser cutting machines using laser triangulation", THE INTERNATIONAL JOURNAL OF ADVANCED MANUFACTURING TECHNOLOGY, SPRINGER, LONDON, vol. 108, no. 11-12, 1 June 2020 (2020-06-01), pages 3819 - 3833, XP037468918, ISSN: 0268-3768, [retrieved on 20200626], DOI: 10.1007/S00170-020-05640-Z

**Beschreibung**

Die vorliegende Erfindung betrifft ein Verfahren zum Erfassen einer Einhängeposition eines Auflagestegs in einer Palette, die zur Verwendung mit einer Flachbettwerkzeugmaschine, insbesondere einer Laserschneid- oder Plasmaschneid-Flachbettwerkzeugmaschine, vorgesehen ist. Ferner betrifft die Erfindung eine zur Durchführung des Verfahrens geeignete Flachbettwerkzeugmaschine.

Flachbettwerkzeugmaschinen, insbesondere Laserschneid- oder Plasmaschneid-Flachbettwerkzeugmaschinen, weisen üblicherweise einen Maschinenbereich auf, in dem die (z.B. Laser-) Bearbeitung stattfindet. Dem Maschinenbereich sind vor und optional nachgelagerte Ablagebereiche für das Rohmaterial und/oder das Schnittgut zugeordnet. Bei Flachbettwerkzeugmaschinen können zu bearbeitende Materialtafeln (z.B. Bleche) dem Maschinenbereich auf einer Palette zugeführt werden. Eine Palette umfasst üblicherweise eine Anordnung von Auflagestegen, mittels derer die zu bearbeitende Materialtafel in einer Auflageebene gelagert werden kann. Je nach Ausführungsform können Auflagestege nur an bestimmten Positionen der Palette eingelegt werden.

Die Palette kann z.B. Teil eines Palettenwechslers sein, der einen der Flachbettwerkzeugmaschine vorgelagerten Ablagebereich darstellt. Nach der Bearbeitung kann eine große Anzahl von geschnittenen Werkstücken auf der Palette vorliegen. Die Werkstücke können von der Palette manuell von einem Bediener oder (teil-) automatisiert absortiert werden. Sowohl für den Fertigungsvorgang als auch für den Absortiervorgang ist die relative Lage zwischen hergestelltem Werkstück und stützenden Strukturen auf der Palette von Bedeutung.

Die Auflagestege sind üblicherweise plattenförmig ausgeführt und weisen gleichmäßig voneinander beabstandete Auflagestegspitzen auf, die entlang einer Kante/Seite des Auflagestegs ausgebildet sind. Die Auflagestege werden vertikal mit nach oben zeigenden Auflagestegspitzen eingesetzt, um viele Auflagepunkte, die eine Auflageebene definieren, für eine Materialtafel und die geschnittenen Werkstücke zu bilden. Im eingebrachten Zustand verlaufen mehrere Auflagestege parallel zueinander. Die Auflagestege sind in ihrem Abstand zueinander entlang einer Längserstreckung der Palette einstellbar angeordnet und können z.B. an einem Rahmen der Palette an gleichbeabstandeten (Einhänge-) Positionen eingehängt werden. So ist es möglich, die Anordnung der Auflagestege einer Palette je nach Bedarf zu konfigurieren, d.h., die Positionen der Auflagestege entlang der Längserstreckung beispielsweise spezifischen für einen Bearbeitungsauftrag zu wählen. Im Bereich der Auflagestegspitzen bilden sich Auflagebereiche aus, in denen die Auflagestege mit einer in der Auflageebene gelagerten Materialtafel in Kontakt stehen können.

Ferner erlauben es moderne Schachtelansätze, eine Belegung einer zu bearbeitenden Materialtafel mit auszuschneidenden Werkstücken in Abhängigkeit von einer vorliegenden Auflagestegkonfiguration festzulegen. Insbesondere werden dabei die Werkstücke hinsichtlich der Position der Auflagestegspitzen bzw. der Auflagebereiche ausgerichtet. Durch eine auf die Position der Auflagestegspitzen abgestimmte Tafelbelegung kann der Verschleiß der Auflagestegspitzen reduziert und die Prozessqualität erhöht werden, indem z.B. das Verkippen von Werkstücken und das anschließende Kollidieren des verkippten Werkstücks mit einem Schneidkopf der Flachbettwerkzeugmaschine vermieden wird oder spezifische (schonende) Einstichpositionen für den Laser angefahren werden. Ausgangspunkt für eine auf die Position der Auflagestegspitzen bzw. der Auflagebereiche abgestimmte Tafelbelegung ist die Kenntnis der zur Verwendung vorgesehenen Auflagestegkonfiguration, die u.a. durch die Einhängepositionen der Auflagestege gegeben ist. Da jedoch nicht bekannt ist, welche Auflagestege gerüstet worden sind, können unter Umständen nicht alle Anwendungen der Flachbettwerkzeugmaschine die Auflagestegpositionen berücksichtigen.

Es ist bekannt, die Position der Auflagestege beispielsweise mittels einer (z.B. am Schneidkopf befestigten) Abstandssensorik innerhalb des Maschinenbereichs oder durch Lasertriangulation zu erfassen. Derartige Verfahren gehen allerdings mit unproduktiven Nebenzeiten durch das "Abtasten" bzw. "Scannen" der leeren Palette einher.

Der Artikel "Measuring the supporting slats of laser cutting machines using laser triangulation", von F. STRUCKMEIER ET AL, und veröffentlicht in THE INTERNATIONAL JOURNAL OF ADVANCED MANUFACTURING TECHNOLOGY offenbart den Oberbegriff der Ansprüche 1 und 16.

Aus der DE 20 2020 101 810 U1 ist eine Vorrichtung zur Bestimmung eines Ist-Zustands von Auflageleisten einer Werkstückauflage bekannt.

Aus der CN 204 867 817 U ist ein Lasergraviersystem bekannt.

Aus der EP 3 338 946 A1 ist Verfahren zur Messung und Kompensation von thermischer Ausdehnung in einer Maschine bekannt.

Einem Aspekt dieser Offenbarung liegt die Aufgabe zugrunde, ein Verfahren zur Erfassung der Einhängeposition eines Auflagestegs und/oder einer Auflagestegspitze anzugeben. Das Verfahren soll insbesondere auch unter widrigen, in der Praxis häufig anzutreffenden Umständen durchgeführt werden können, beispielsweise bei einer undefinierten Beleuchtungssituation oder bei Verschleiß und Verschlackung der Auflagestegspitzen. Das Verfahren soll möglichst trotz der auftretenden Oberflächenzustände von Auflagestegen robuste, schnelle und möglichst genaue Ergebnisse liefern.

Zumindest eine dieser Aufgaben wird gelöst durch ein Verfahren nach Anspruch 1 und durch eine Flachbettwerkzeugmaschine nach Anspruch 16. Weiterbildungen der Erfindung sind in den Unteransprüchen angegeben.

In einem Aspekt der Erfindung (siehe Anspruch 1) ist ein Verfahren definiert, mit dem eine Einhängeposition eines Auflagestegs in einer Palette erfasst werden kann. Die Palette ist zur Verwendung mit einer Flachbettwerkzeugmaschine, insbesondere einer Laserschneid- oder Plasmaschneid-Flachbettwerkzeugmaschine, mit einer Mehrzahl von Auflagestegen entlang einer Längsrichtung bestückt, wobei jeder der Auflagestege entlang einer Haupterstreckungsrichtung, die quer zur Längsrichtung der Palette ausgerichtet ist, mehrere Auflagestegspitzen aufweist und die Auflagestegspitzen der Mehrzahl von Auflagestegen eine Auflageebene definieren. Das Verfahren umfasst die Schritte:

- Erstellen eines zweidimensionalen, eine Mehrzahl von Bildpixel aufweisenden Kontrastbilddatensatzes der Palette, wobei jedem Bildpixel ein Pixelwert und eine Pixelflächeneinheit der Auflageebene zugeordnet ist und der Kontrastbilddatensatz Bereiche, die den Auflagestegspitzen zugeordnet sind, als lokale Pixelwert-Extrema in einem einheitlichen Pixelwert-Untergrund umfasst,
- Bestimmen einer Längsposition im Kontrastbilddatensatz von denjenigen Bereichen, die den Auflagestegspitzen eines der Mehrzahl von Auflagestegen zugeordnet sind, unter Verwendung der lokalen Pixelwert-Extrema und
- Ableiten der Einhängeposition des Auflagestegs in der Palette anhand der Längsposition im Kontrastbilddatensatz und einem Ausmaß der Pixelflächeneinheit in der Längsrichtung.

In einem weiteren Aspekt der Erfindung (siehe Anspruch 16) ist eine Flachbettwerkzeugmaschine definiert, insbesondere Laserschneid- oder Plasmaschneid-Flachbettwerkzeugmaschine:

> eine Palette mit mehreren an Einhängepositionen eingehängten Auflagestegen, wobei jeder der Auflagestege eine Mehrzahl von Auflagestegspitzen aufweist, die eine Auflageebene definieren,
> eine Kamera zum Erzeugen eines zweidimensionalen Kamerabildes oder eines zweidimensionalen Dunkelfeldkamerabildes der Palette und
> eine Auswertevorrichtung.

Die Kamera und/oder die Auswertevorrichtung sind ausgebildet für ein

- Erstellen eines zweidimensionalen, eine Mehrzahl von Bildpixel aufweisenden Kontrastbilddatensatzes der Palette, wobei jedem Bildpixel ein Pixelwert und eine Pixelflächeneinheit der Auflageebene zugeordnet ist und der Kontrastbilddatensatz Bereiche, die den Auflagestegspitzen zugeordnet sind, als lokale Pixelwert-Extrema in einem einheitlichen Pixelwert-Untergrund umfasst.

Die Auswertevorrichtung ist ferner ausgebildet für ein:

- Bestimmen einer Längsposition im Kontrastbilddatensatz von denjenigen Bereichen, die den Auflagestegspitzen eines der Mehrzahl von Auflagestegen zugeordnet sind, unter Verwendung der lokalen Pixelwert-Extrema und
- Ableiten der Einhängeposition des Auflagestegs in der Palette anhand der Längsposition im Kontrastbilddatensatz und einem Ausmaß der Pixelflächeneinheit in der Längsrichtung.

In einigen Weiterbildungen kann einer der den Auflagestegspitzen zugeordneten Bereiche einer Auflagestegspitze und/oder einer zu der Auflagestegspitze führende Flanke zugeordnet sein.

In einigen Weiterbildungen kann der einheitliche Pixelwert-Untergrund keine Struktur darstellen und/oder Bildpixel umfassen, die einen konstanten Pixelwert oder eine zufällige Pixelwertverteilung um einen konstanten Pixelwert aufweisen.

In einigen Weiterbildungen kann das Erstellen des Kontrastbilddatensatzes der Palette ferner umfassen:

- Erzeugen eines zweidimensionalen Kamerabildes der Palette im sichtbaren und/oder infraroten Spektrum, wobei das Kamerabild die in Reihen und Spalten angeordneten Bildpixel aufweist, denen jeweils die Pixelflächeneinheit der Auflageebene zugeordnet ist,
- Fourier-Transformieren des Kamerabildes in einen Frequenzraum und Ausgeben eines Transformationsfrequenzdatensatzes,
- Filtern des Transformationsfrequenzdatensatzes zur Hervorhebung von Frequenzen im Frequenzraum, die zu den Bereichen gehören, die den Auflagestegspitzen zugeordnet sind, und
- Rücktransformieren des gefilterten Transformationsfrequenzdatensatzes mittels inverser Fourier-Transformation in einen rücktransformierten Bilddatensatz und Ausgeben des rücktransformierten Bilddatensatzes als den Kontrastbilddatensatz.

In einigen Weiterbildungen können benachbarte Auflagestegspitzen in der Haupterstreckungsrichtung einen im Wesentlichen gleichen Spitzenabstand voneinander aufweisen. Dann kann das Filtern des Transformationsfrequenzdatensatzes ein Identifizieren eines dem Spitzenabstand zugeordneten Frequenzbands im Frequenzraum und ein Beschränken des Transformationsfrequenzdatensatzes auf das Frequenzband umfassen. Das Frequenzband kann z.B. um eine Spitzenwiederholungsfrequenz ausgebildet sein, die der Haupterstreckungsrichtung zugeordnet ist. Sie kann sich insbesondere ergeben aus:

$$\frac{h * \Delta x}{d},$$

mit

h: Anzahl der Pixel des im Kamerabild dargestellten Bereichs der Auflageebene in Haupterstreckungsrichtung,

$\Delta x$: Ausmaß der Pixelflächeneinheit in der Haupterstreckungsrichtung und

d: Spitzenabstand benachbarter Auflagestegspitzen.

In einigen Weiterbildungen kann das Erzeugen des zweidimensionalen Kamerabildes durch Erzeugen eines Dunkelfeld-Kamerabildes der Palette im Nah-Infrarot-Frequenzspektrum erfolgen und kann das Dunkelfeld-Kamerabild aus einer Aufnahmerichtung aufgenommen werden, die mit der Auflageebene einen Winkel einschließt, der im Bereich von 10° bis 70° liegt, insbesondere größer als 45°, beispielsweise 60°, ist, und die sich unter einem Winkel in einem Bereich von 70° bis 110°, insbesondere senkrecht, zur Haupterstreckungsrichtung erstreckt.

In einigen Weiterbildungen kann das Erstellen des Kontrastbilddatensatzes der Palette ferner umfassen, den Kontrastbilddatensatzes durch Erzeugen eines Dunkelfeld-Kamerabildes der Palette im Nah-Infrarot-Frequenzspektrum aus einer Aufnahmerichtung zu erzeugen, die mit der Auflageebene einen Winkel einschließt. Der Winkel kann z.B. im Bereich von 10° bis 70° liegen, insbesondere größer als 45°, beispielsweise 60°, sein. Ferne kann die Aufnahmerichtung sich unter einem Winkel in einem Bereich von 70° bis 110°, insbesondere senkrecht, zur Haupterstreckungsrichtung erstrecken.

In einigen Weiterbildungen kann das Erstellen des Kontrastbilddatensatzes der Palette ferner ein Beleuchten der Palette von oben mit Licht eines Nah-Infrarot-Frequenzspektrums aus einer oder mehreren Beleuchtungsrichtungen umfassen. Das Licht kann insbesondere im Frequenzspektrum von 845 nm bis 855 nm und/oder von 935 nm bis 945 nm liegen.

In einigen Weiterbildungen kann mindestens eine der Beleuchtungsrichtungen mit der Auflageebene einen Winkel einschließen, der kleiner als 30° ist und insbesondere in einem Bereich von 10° bis 20°, beispielsweise bei ca. 15°, liegt, und kann die mindestens eine der Beleuchtungsrichtungen in die Auflageebene projiziert mit einer Haupterstreckungsrichtung der Auflagesteg einen Winkel einschließen, der kleiner als 30° ist und insbesondere in einem Bereich von 10° bis 25°, beispielsweise bei ca. 15°, liegt.

In einigen Weiterbildungen kann das Erzeugen des zweidimensionalen Kamerabildes oder das Erzeugen des zweidimensionalen Dunkelfeld-Kamerabildes ein Aufnehmen mehrerer Teilkamerabilder, die jeweils einen Teilbereich der Palette zweidimensional darstellen, und ein Zusammensetzen der Teilkamerabilder zu dem zweidimensionalen Kamerabild oder dem zweidimensionalen Dunkelfeld-Kamerabild der Palette umfassen.

In einigen Weiterbildungen kann das Bestimmen der Längsposition im Kontrastbilddatensatz ein Durchführen einer Template-Matching-Bildanalyse unter Verwendung eines Templates umfassen. Das Template kann als ein Bilddatensatz eines eine Mehrzahl von Auflagestegspitzen aufweisenden Auflagestegs, insbesondere eines in einem Innenbereich der Palette angeordneten Auflagestegs, ausgebildet sein.

In einigen Weiterbildungen kann das Bestimmen der Längsposition im Kontrastbilddatensatz ein Summieren der Pixelwerte der Bildpixel des Kontrastbilddatensatzes reihenweise entsprechend der Haupterstreckungsrichtung und Ausgeben einer ersten Verteilung von ersten Pixelwertsummen und ein Bestimmen eines lokalen Extremums in der ersten Verteilung und Ausgeben der Reihe des lokalen Extremums als Längsposition umfassen.

In einigen Weiterbildungen kann das Verfahren ferner umfassen:

- Summieren der Pixelwerte der Bildpixel des Kontrastbilddatensatzes spaltenweise entsprechend der Längsrichtung im Bereich des lokalen Extremums und Ausgeben einer zweiten Verteilung von zweiten Pixelwertsummen,
- Bestimmen mehrerer lokaler Extrema in der zweiten Verteilung und Ausgeben der Spalten der lokalen Extrema und
- Bestimmen von Bildpositionen der den Auflagestegspitzen zugeordneten Bereiche im Kontrastbilddatensatz anhand der entsprechenden Reihe des bestimmten lokalen Extremums und den Spalten der bestimmten lokalen Extrema.

In einigen Weiterbildungen können die Auflagestege an vorgegebenen Einhängepositionen an einer Längsseite der Palette einhängbar sein und kann sich die Haupterstreckungsrichtung quer zur Längsseite erstrecken und kann die Palette eine Referenzstruktur aufweisen, die im Kontrastbilddatensatz als Referenzpixelanordnung identifizierbar ist. Das Ableiten der Einhängeposition des Auflagestegs in der Palette kann erfolgen, indem im Kontrastbilddatensatz ein Abstand zwischen der Referenzpixelanordnung und der Längsposition quer zur Haupterstreckungsrichtung ermittelt wird und indem basierend auf dem ermittelten Abstand eine der vorgegebenen Einhängepositionen für die Längsposition identifiziert wird.

In einigen Weiterbildungen kann der Pixelwert ein Grauwert, ein Farbwert oder ein Helligkeitswert sein.

In einigen Weiterbildungen kann die Kamera dazu eingerichtet sein,

- das zweidimensionales Kamerabild der Palette im sichtbaren oder infraroten Spektrum zu erzeugen, wobei das Kamerabild in Reihen und Spalten angeordnete Bildpixel aufweist, denen jeweils eine Pixelflächeneinheit der Auflageebene zugeordnet ist, oder
- einen Kontrastbilddatensatz durch Aufnehmen des zweidimensionalen Dunkelfeld-Kamerabildes der Palette im Nah-Infrarot-Frequenzspektrum

    aus einer Aufnahmerichtung zu erzeugen.
    In einigen Weiterbildungen kann die Auswertevorrichtung dazu ausgebildet sein, das Verfahren auszuführen und/oder kann
    einen Prozessor umfassen, der eingerichtet ist

- das Kamerabild in einen Frequenzraum zu Fouriertransformieren und einen Transformationsfrequenzdatensatz auszugeben,
- den Transformationsfrequenzdatensatz zur Hervorhebung von Frequenzen im Frequenzraum, die zu den Bereichen gehören, die den Auflagestegspitzen zugeordnet sind, zu filtern und
- den gefilterten Transformationsfrequenzdatensatz mittels inverser Fourier-Transformation rückzutransformieren und den rücktransformierten Bilddatensatz als den Kontrastbilddatensatz auszugeben.

In einigen Weiterbildungen kann mindestens eine Beleuchtungseinrichtung vorgesehen sein, die zum Beleuchten der Palette mit Licht eines Nah-Infrarot-Frequenzspektrums aus einer Beleuchtungsrichtungen eingerichtet ist. Mindestens eine der Beleuchtungsrichtungen kann mit der Auflageebene einen Winkel einschließen, der kleiner als 30° ist und insbesondere in einem Bereich von 10° bis 20°, beispielsweise bei ca. 15°, liegt. Die mindestens eine der Beleuchtungsrichtungen kann in die Auflageebene projiziert mit einer Haupterstreckungsrichtung des Auflagestegs einen Winkel einschließen, der kleiner als 30° ist und insbesondere in einem Bereich von 10° bis 25°, beispielsweise bei ca. 15°, liegt.

In einigen Weiterbildungen kann das Verfahren ein Bestimmen einzelner Positionen von den einzelnen Auflagestegspitzen zugeordneten Bereiche innerhalb der den ersten lokalen Pixelwertsummen-Extrema zugeordneten Spalten oder Reihen umfassen. Hierzu kann z.B. eine Parallelprojektion-Bildanalyse durchgeführt werden, bei der die Pixelwerte der Bildpixel der den ersten lokalen Pixelwertsummen-Extrema zugeordneten Spalten oder Reihen des Kontrastbilddatensatzes, d.h., die einem Auflagesteg zugeordnet sind, (reihenweise oder spaltenweise) senkrecht zur Haupterstreckungsrichtung des Auflagestegs zu einer der jeweiligen Reihe oder Zeile zugeordneten zweiten Pixelwertsumme summiert werden. Darauf basierend können die Reihen oder die Spalten, deren zugeordnete Pixelwertsummen ein zweites lokales Pixelwertsummen-Extrema bilden, bestimmt werden.

In einigen Weiterbildungen kann das Bestimmen der Längsposition der den Auflagestegspitzen zugeordneten Bereiche im Kontrastbilddatensatz alternativ oder zusätzlich eine Durchführung einer Sliding-Window-Approach-Bildanalyse, bei der ein Framework um einen Template-Matching-Filter herum erstellt wird, oder einer auf einem SIFT-Algorithmus basierenden Bildanalyse oder einer auf neuronalen Netzen basierenden Bildanalyse umfassen.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:

Fig. 1     eine schematische räumliche Darstellung einer Flachbettwerkzeugmaschine mit einer mit mehreren Auflagestegen gerüsteten Palette,

Fig. 2     ein Flussdiagramm zur Erläuterung des Verfahrens zum Erfassen einer Einhängeposition eines Auflagestegs in einer Palette,

Fig. 3     ein entzerrtes Kamerabild einer beispielhaften Palette (Vogelperspektive),

Fig. 4     eine Darstellung eines Amplitudenspektrums eines auf einen Frequenzraum bezogenen Transformationsfrequenzdatensatzes des Kamerabildes,

Fig. 5     nebeneinander gestellte Ausschnitte eines mittels gefilterter Fourier-Transformation erzeugten beispielhaften Kontrastbilddatensatz und des zugehörigen Kamerabilds einer Palette,

Fig. 6     ein Flussdiagramm zur Erläuterung der Berechnung des Kontrastbilddatensatzes der Palette mittels Fourier-Transformation und Filterung im Frequenzraum,

Fig. 7     einen mittels Dunkelfeld-Beleuchtung erzeugten beispielhaften Kontrastbilddatensatz,

Fig. 8     ein Flussdiagramm zur Erläuterung der Bildgebung eines Kontrastbilddatensatzes der Palette mittels Dunkelfeld-Beleuchtung und Dunkelfeld-Aufnahme und

Fig. 9     einen Ausschnitt eines beispielhaften Templates für eine Template-Bildanalyse.

Hierin beschriebene Aspekte basieren zum Teil auf der Erkenntnis, dass die Erfassung der Einhängeposition eines Auflagestegs per Bilderkennung, insbesondere einer auf die Erfassung der Auflagestegspitzen gerichtete Bilderkennung, robust, schnell und hochgenau erfolgen kann, wenn ein Kontrastbilddatensatz verwendet wird, in welchem die Auflagestegspitzen hervorgehoben und andere, "störende" Strukturen weitgehend unterdrückt bzw. nicht dargestellt sind. Störende Strukturen können z.B. durch eine undefinierte Beleuchtungssituation, Verschleiß, Verschlackung und Oberflächenzustand des Auflagestegs hervorgerufen werden. Mit einem derartigen störungsarmen Kontrastbilddatensatz können fehlerhafte Auflagestegerkennungen reduziert werden. Ferner kann der Bildanalyseaufwand reduziert werden.

Weiterhin haben die Erfinder erkannt, dass ein Kontrastbilddatensatz sowohl über den Weg der Fourier-Transformation als auch über den Weg der Dunkelfeld-Beleuchtung bzw. Dunkelfeld-Aufnahme erstellt werden kann. Darüber hinaus können beide Wege auch miteinander kombiniert werden, indem beispielsweise ein mittels Dunkelfeld-Beleuchtung bzw. Dunkelfeld-Aufnahme erstelltes (Kamera-) Bild anschließend mittels Fourier-Transformation gefiltert wird, bevor es in einen Kontrastbilddatensatz überführt wird. Eine derartige Kombination beider Wege kann einen noch störungsärmeren Kontrastbilddatensatz ermöglichen.

In beiden Fällen wird zunächst eine Aufnahme der (üblicherweise unbelegten) Palette mit einer Kamera angefertigt, die anschließend perspektivisch "in die Vogelperspektive" transformiert wird, sodass die Auflagestege längs oder quer, z.B. als (vertikale oder horizontale) sich entlang der Haupterstreckungsrichtung der Auflagestege erstreckende Striche, im Bild erscheinen. Die Aufnahme kann auch aus mehreren Teilaufnahmen verschiedener Kameras zusammengesetzt und sowohl außerhalb ("vor") als auch innerhalb der Maschine (d.h. im Fertigungsraum) aufgenommen werden.

In der auszuwertenden Aufnahme wird die Auflageebene ohne perspektivische Verzerrung im Kontrastbilddatensatz dargestellt. Zur Entzerrung kann ein ursprünglich perspektivisch verzerrtes Bild beispielsweise durch übliche Methoden der Homographie bearbeitet werden. So kann jedem Bildpixel eine, insbesondere quadratförmige, für alle Bildpixel gleich große Pixelflächeneinheit der Auflageebene von beispielsweise 1 mm$^2$ zugeordnet werden. Derartig entzerrt können gleichgroße Objekte in der Auflageebene im Kontrastbilddatensatz gleichgroß dargestellt werden, unabhängig von der Position des einzelnen Objekts in der Auflageebene bzw. im Kontrastbilddatensatz. Sind die Ausmaße eines Bildpixels in einer Erstreckungsrichtung der Auflagestege sowie quer dazu bekannt, kann die Entzerrung eine Bestimmung der Längsposition der den Auflagestegspitzen zugeordneten Bereiche (und somit eine Bestimmung der Längsposition des zugehörigen Auflagestegs) erleichtern.

Die hierin offenbarten Konzepte basieren somit unter anderem darauf, dass ein Kontrastbilddatensatz einer Palette verwendet wird, in dem Bereiche, die den Auflagestegspitzen zugeordnet sind, hervorgehoben sind. Beispielhaft können derartige kontrastreiche Bilddatensätze durch spezielle Bildgebungsanordnungen oder Bildanalyseverfahren (oder eine Kombination beider Verfahren) gewonnen werden. Als Beispiele werden hierin eine Filterung im Rahmen einer Fourier-Bildbearbeitung und eine Anwendung der Dunkelfeld-Bildgebung näher erläutert. Dabei können die Filterung mittels der Fourier-Bildbearbeitung und die Anwendung der Dunkelfeld-Bildgebung alternativ eingesetzt oder aber auch miteinander kombiniert werden, indem beispielsweise zunächst unter Anwendung der Dunkelfeld-Bildgebung ein (Kamera-) Bild der Palette aufgenommen wird, welches dann durch Filterung mittels Fourier-Bildbearbeitung bearbeitet wird. Abwandlungen hierzu oder weitere Ansätze ergeben sich aus der gemeinsamen Beschreibung dieser beispielhaften Ausführungsformen.

Bei der Fourier-Transformation handelt es sich um eine im Bereich der Bildverarbeitung übliche Transformation eines Bilddatensatzes, der auf ein erstes Bezugssystem, den sogenannten Bild- oder Ortsraum, bezogen ist, in einen Transformationsfrequenzdatensatz, der auf ein zweites Bezugssystem, den sogenannten Frequenzraum, bezogen ist.

Bei der Fourier-Transformation werden einem periodisch regelmäßig auftretenden Muster im Ortsraum, d.h. auf die Geometrie der Palette bezogen, eine Frequenz im Frequenzraum des Transformationsbilddatensatzes zugeordnet. Im Bildraum periodisch regelmäßig auftretende Muster entlang den Pixelaufreihungsrichtungen werden in der Darstellung des Transformationsfrequenzdatensatzes in einem Amplitudenspektrum als horizontale bzw. vertikale (Frequenz-) Linien dargestellt und sind somit leicht zu erkennen. Auch die Auflagestegspitzen bilden entlang einer Haupterstreckungsrichtung des Auflagestegs ein Wiederholungsmuster im Bilddatensatz und können somit Frequenzen im Transformationsfrequenzdatensatzes zugeordnet werden. Auch diese Frequenzen werden (eine entsprechende Ausrichtung der Auflagestege vorausgesetzt) im Amplitudenspektrum als Linien dargestellt.

Durch Filtern des Transformationsfrequenzdatensatzes können die den Auflagestegspitzen zugeordneten Frequenzen hervorgehoben und demgegenüber die anderen Frequenzen (relativ) abgeschwächt oder sogar herausgenommen werden. Durch anschließendes Rücktransformieren des gefilterten Transformationsfrequenzdatensatzes kann ein (auf den Bildraum bezogener) Bilddatensatz ausgegeben werden, in dem die Auflagestegspitzen kontraststark hervorgehoben sind. Dagegen sind "störende" Strukturen oder Texturen, die den Auflagestegen nicht eindeutig zugeordnet werden, zumindest abgeschwächt, sodass mit anderen Worten die Bereiche der Auflagestegspitzen als lokale Pixelwert-Extrema in einem einheitlichen Pixelwert-Untergrund im Rahmen eines Kontrastbilddatensatzes der Palette dargestellt werden können. Bei einem lokalen Pixelwert-Extremum kann es sich dabei um eine Gruppe von benachbarten Bildpixeln als auch um einzelne Bildpixel handeln. Ist das lokale Pixelwert-Extremum als Gruppe von benachbarten Bildpixeln ausgebildet, weisen damit die zur Gruppe zugehörigen Bildpixel jeweils deutlich höhere Pixelwerte auf als jene Bildpixel, die die Bildpixelgruppe des lokalen Pixelwert-Extremums umgeben und den einheitliche Pixelwert-Untergrund ausbilden. Bei dem Pixelwert kann es sich beispielsweise um einen Grauwert handeln, wobei ein niedriger Grauwert einem dunklen, ein hoher Grauwert einem hellen (beleuchteten) Bildpixel entspricht.

Ein Kontrastbilddatensatz der Palette kann auch durch die Methode der Dunkelfeld-Beleuchtung bzw. Dunkelfeld-Aufnahme (Dunkelfeld-Strategie) gewonnen werden. Dunkelfeld-Strategien werden z.B. in der automatischen Sichtprüfung genutzt. Dunkelfeld-Strategien verwenden eine Dunkelfeld-Beleuchtungseinrichtung und eine ein Dunkelfeld-Bild aufnehmende Dunkelfeld-Kamera. Die Beleuchtung erfolgt in einem (oft sehr flachen) Winkel, wogegen die Aufnahme unter einem anderen (steilen) Winkel erfolgen kann. Der Großteil des durch die Dunkelfeld-Beleuchtungseinrichtung ausgestrahlten Lichts wird nicht zur Dunkelfeld-Kamera reflektiert. Bei der angesprochenen Sichtprüfung streuen/reflektieren lediglich Defekte in der Oberfläche, wogegen im vorliegenden Fall der Aufnahme einer Palette mit Auflagestegen eben nur die Auflagestegsspitzen und zu den Auflagestegsspitzen führende Flanke Licht in die Dunkelfeld-Kamera streuen/reflektieren. Im Ergebnis entsteht ein größtenteils dunkles Dunkelfeld-Bild (hierin als einheitlicher Pixelwert-Untergrund bezeichnet), indem lediglich die Auflagestegsspitzen und Flanken wesentlich heller als ihre Umgebung (hierin als lokale Pixelwert-Extrema bezeichnet) erscheinen. Ein derartiges Dunkelfeld-Bild ist ein weiteres Beispiel für einen Kontrastbilddatensatz der Palette, in dem die den Auflagestegspitzen zugeordneten Bereiche als lokale Pixelwert-Extrema in einem einheitlichen Pixelwert-Untergrund dargestellt sind.

Durch den Einsatz von Licht eines Nah-Infrarot-Frequenzspektrums zur (Dunkelfeld-) Beleuchtung können Fremdlichteinflüsse durch Sonnenlicht oder künstliche Beleuchtung auch ohne Einhausung zuverlässig unterdrückt werden. Fremdlichteinflüsse durch Sonnenlicht lassen sich dabei insbesondere dadurch unterdrücken, dass zur Beleuchtung Nah-Infrarot-Licht im Frequenzspektrum von 845 nm bis 855 nm und/oder von 935 nm bis 945 nm zum Einsatz kommt, da dies den Bandlücken im Spektrum des Sonnenlichts auf der Erdoberfläche entspricht. Das Aufnehmen eines Dunkelfeld-Kamerabildes der Palette im Nah-Infrarot-Frequenzspektrum, insbesondere in den genannten Frequenzspektren, kann insbesondere durch den Einsatz eines entsprechenden Spektralfilters realisiert werden.

Die Bestimmung der Einhängeposition basiert auf einer Analyse des Kontrastbilddatensatzes. Verschiedene Analyseverfahren werden hierin beispielhaft offenbart.

Bei der Template-Matching-Bildanalyse handelt es sich um eine Methode zur Erkennung von Objekten in einem Bilddatensatz, die auf einem zweistufigen Ansatz basiert. Zunächst wird ein Template des zu erkennenden Objektes erstellt, dann wird das Vorkommen des Templates in einem Bilddatensatz mit Hilfe eines Ähnlichkeitsmaßes, z.B. der Summe der absoluten Unterschiede, bewertet. Die Template-Matching-Bildanalyse ist beispielsweise in G. Cheng and J. Han, "A survey on object detection in optical remote sensing images," ISPRS Journal of Photogrammetry and Remote Sensing, vol. 117, pp. 11-28, 2016 detailliert beschrieben.

Das Template, das als Bilddatensatz eines Auflagestegs ausgebildet sein kann, kann dabei insbesondere durch Aufnahmen eines Kamerabildes bzw. eines Dunkelfeld-Kamerabildes im Nah-Infrarot-Frequenzspektrum eines neuwertigen (nicht verschlissenen, nicht verschlackten) Auflagestegs erzeugt werden.

Da sich bedingt durch perspektivische Effekte die Darstellung des Auflagestegs abhängig von dessen Einhängeposition entlang einer Längserstreckung der Palette verändern kann, kann als Template ein Auflagesteg ausgewählt werden, der im inneren Bereich der Längserstreckung der Palette eingehängt wurde. Ein derartiges Template kann sowohl zur Erkennung von weiter "vorne" als auch weiter "hinten" eingehängten Auflagestegen genutzt werden.

Auch bei der Parallelprojektion-Bildanalyse handelt es sich um eine Methode zur Erkennung von Objekten, die sich über einen gewissen Abschnitt einer Reihe oder einer Spalte eines Bilddatensatzes erstrecken. Insbesondere bei der Parallelprojektion-Bildanalyse können Auflagestege (deren Hauptstreckungsrichtung sich entlang einer Bildpixelzeile oder einer Bildpixelreihe erstrecken) im Bild sehr einfach und schnell identifiziert werden, indem die Grauwerte der Bildpixel zeilenweise (bzw. spaltenweise) addiert werden. Auflagestege bilden ein Maximum in dieser durch Projektion/Aufsummieren der Pixelwerte entlang der Auflagestege erzeugten "Signalverteilung". Die Parallelprojektion-Bildanalyse ist beispielsweise in P. Du, et al., "Improved peak detection in mass spectrum by incorporating continuous wavelet transform-based pattern matching," Bioinformatics, vol. 22, no. 17, pp. 2059-2065, 2006 beschrieben.

Weitere Verfahren zur Bildanalyse des Kontrastbilddatensatzes umfassen eine Sliding-Window-Approach-Bildanalyse (siehe z.B. M. Barva, et al., "Parallel integral projection transform for straight electrode localization in 3-D ultrasound images," IEEE transactions on ultrasonics, ferroelectrics, and frequency control, vol. 55, no. 7,pp. 1559-1569, 2008), eine SIFT-Algorithmus-basierte Bildanalyse (siehe z.B. D. G. Lowe, "Object recognition from local scaleinvariant features." in IEEE International Conference on Computer Vision, vol. 99, no. 2, 1999, pp. 1150-1157) und eine auf neuronalen Netzen basierende Bildanalyse (siehe z.B. D. Erhan, et al., "Scalable object detection using deep neural networks," in IEEE Conference on Computer Vision and Pattern Recognition, 2014, pp. 2147-2154 und K. He, et al., "Mask r-cnn," in Proceedings of the IEEE International Conference on Computer Vision, 2017, pp. 2961-2969).

Allgemein können Fehlidentifikationen durch z.B. stark reflektierende Kanten an den Auflagestegen oder durch Schneidbutzen hervorgerufen werden. Um derartige Fehlidentifikationen nachträglich auszuschließen können erkannte Auflagesteg-Kandidaten überprüft werden. Beispielsweise kann geprüft werden, wie stark die Grauwerte des dem Auflagesteg-Kandidaten zugeordneten Bildabschnitts in Richtung der Auflagestegspitzen schwanken. Liegt die Schwankung oberhalb eines festzulegenden Schwellwerts, kann von einem fehlerhaft identifizierten Auflagesteg-Kandidaten ausgegangen werden und dieser ausgeschlossen werden. Auf diese Weise können Fehlidentifikationen bei der Verwendung der Parallelprojektion-Bildanalyse in vorteilhafter Weise schnell und einfach vermieden werden.

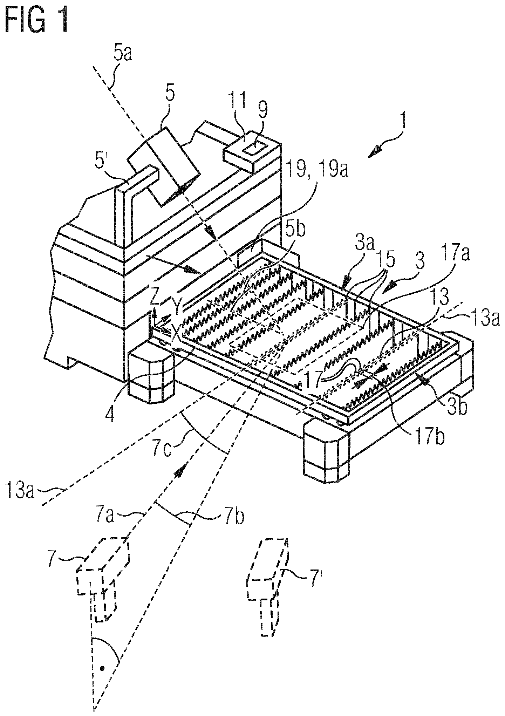

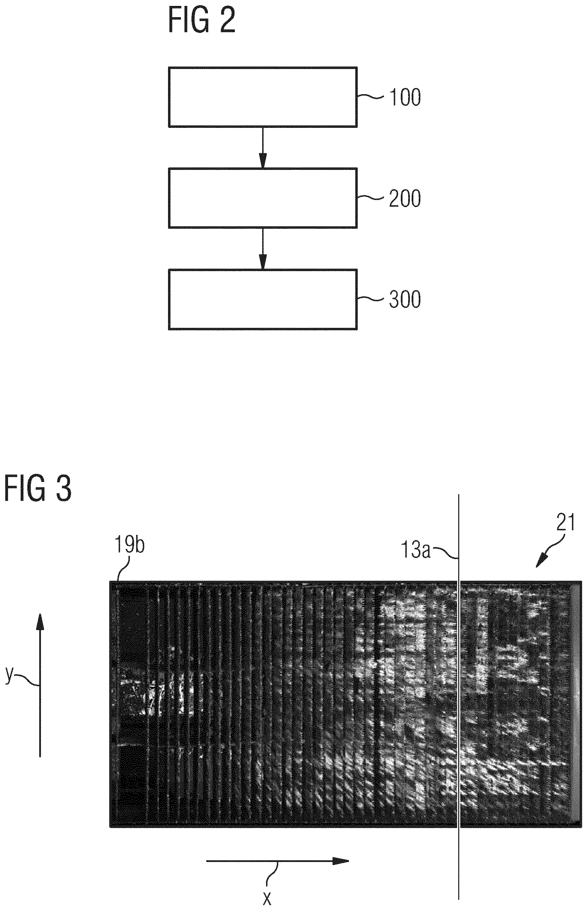

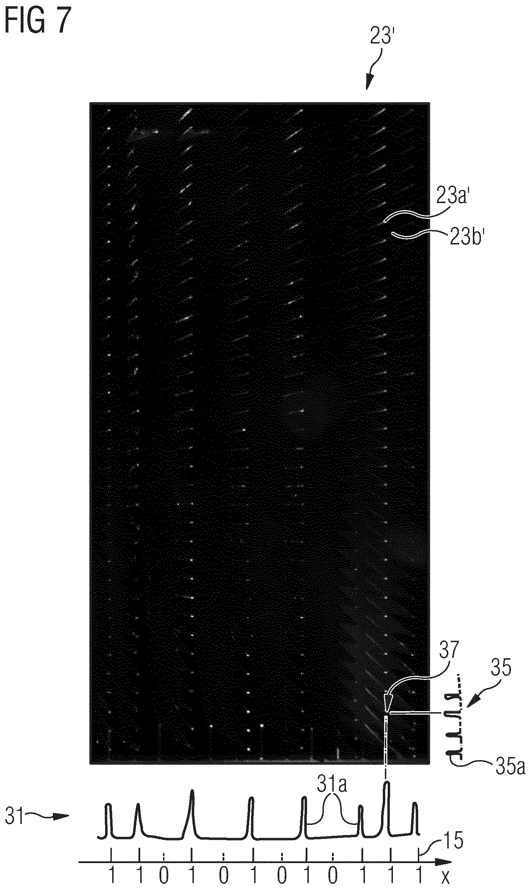

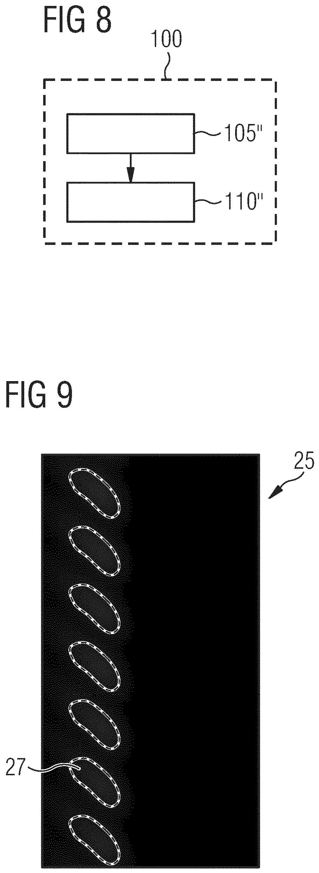

Nachfolgend wird mit Bezug auf Fig. 1 eine Anlage mit einer Flachbettwerkzeugmaschine beschrieben. Fig. 2 fasst die Schritte eines Verfahrens zum Erfassen einer Anhängeposition im Rahmen eines Flussdiagramms zusammen. Anhand der Figuren 3 bis 6 wird die Erzeugung eines Kontrastbilddatensatzes mittels gefilterter Fourier-Transformation erläutert. Anhand der Figuren 7 und 8 wird die Erzeugung eines Kontrastbilddatensatzes mit einem Dunkelfeld-Ansatz erläutert. Fig. 9 verdeutlicht ein Template zur Bildanalyse.

Fig. 1 zeigt eine Flachbettwerkzeugmaschine 1 mit einer Palette 3, einer Kamera 5, (gestrichelt dargestellten) Beleuchtungseinrichtungen 7, 7' sowie einer einen Prozessor 9 umfassende, mit der Kamera 5 verbundene Auswertevorrichtung 11.

Entlang einer Längsseite 3a der Palette 3 (welche die Längserstreckung definiert) können Auflagestege 13 in mehreren, diskreten Einhängepositionen 15 in einen Rahmen 4 der Palette 3 eingehängt werden, wobei Einhängen hierin allgemein jede Art einer ortsfesten Anordnung und optional Befestigung miteinschließt. In einige Einhängepositionen 15 wurden im Beispiel der Palette der Fig. 1 keine Auflagestege 13 eingehängt. Man erkennt, dass nahe der Werkzeugmaschine die Auflagestege 13 dichter gerüstet sind als an der entfernten Endseite 3b der Palette.

Die Auflagestege 13 erstrecken sich entlang einer gemeinsamen Haupterstreckungsrichtung 13a (in Fig. 1 entlang von Endseiten 3b der Palette 3), sind jeweils plattenförmig ausgeführt und weisen eine Mehrzahl von Auflagestegspitzen 17 auf. Die Auflagestegspitzen 17 bilden/definieren eine gemeinsame Auflageebene 17a. In der Haupterstreckungsrichtung 13a sind aufeinanderfolgende/benachbarte Auflagestegspitzen 17 voneinander jeweils im Spitzenabstand 17b entfernt angeordnet. Üblicherweise ist der Spitzenabstand 17b für alle Auflagestege 13 im Wesentlichen gleich.

Eine (nicht dargestellte) Materialtafel, die zur Bearbeitung mit der Flachbettwerkzeugmaschine 1 vorgesehen ist, kann auf den Auflagestegen 13 in der Auflageebene 17a gelagert werden. Dabei stehen die Auflagestegspitzen 17 mit der Materialtafel in Kontakt, sodass beispielsweise bei der Materialbearbeitung der Laserstrahl auch mit den Auflagestegspitzen 17 wechselwirken kann. Um die Positionen der Auflagestege 13 beispielsweise bereits bei der Anordnung von zu schneidenden Werkstücken in der Materialtafel berücksichtigen zu können, ist bevorzugt eine automatisierte Erkennung der Positionen der Auflagestege 13 wünschenswert.

Um ein korrektes Positionieren der Materialtafel sicherzustellen, weist die Palette 3 einen am Rahmen 4 angeordneten und schematisch in Fig. 1 dargestellten Anschlag 19 auf. Die Ausgestaltung des Anschlags 19 erlaubt die Verwendung desselben als eine optisch erfassbare Referenzstruktur 19a bei der Bildverarbeitung.

Die Kamera 5 ist zum Beispiel durch einen Kameraarm 5' mit einem Fertigungsgehäuse der Flachbettwerkzeugmaschine 1 verbunden. Mittels der Kamera 5 kann ein zweidimensionales, insbesondere monochromes oder farbiges, Kamerabild der Palette 3 im sichtbaren oder infraroten Spektrum (siehe Bilddatensatz 21 Fig. 3) oder ein Dunkelfeld-Kamerabild der Palette 3 im Nah-Infrarot-Frequenzspektrum (siehe Kontrastbilddatensatz 23' Fig. 7) erzeugt werden. Die Aufnahme des jeweiligen Bildes erfolgt aus einer Aufnahmerichtung 5a von seitlich oben auf die Palette 3. Aufgrund der schrägen Aufnahmerichtung 5a kann eine optische oder digitale Entzerrung des Kamerabilds zur einfachen Bildverarbeitung erfolgen. Die in den Figuren 3 und 7 gezeigten Bilder sind entsprechend entzerrte Kamerabilder. Wie bereits angesprochen kann ein derartig "entzerrtes" Kamerabild der Auflageebene 17a beispielsweise durch die Methode der Homographie bereitgestellt werden.

Die (gemeinsame) Haupterstreckungsrichtung 13a der abgebildeten Auflagestege 13 und die quer dazu verlaufende Längsrichtung der abgebildeten Palette 3 können dabei auch in Bezug auf den Bilddatensatz 21, den Kontrastbilddatensatz (23) sowie das Dunkelfeld-Kamerabild bzw. den Kontrastbilddatensatz (23') für entsprechende bildbezogene bzw. bilddatensatzbezogene Richtungsangaben verwendet werden.

Das Kamerabild sowie das Dunkelfeld-Kamerabild weisen in Reihen und Spalten angeordnete Bildpixel auf, denen jeweils ein Pixelwert und eine üblicherweise quadratische, gleichgroße Pixelflächeneinheit der Auflageebene zugeordnet ist. Bei dem Pixelwert handelt es sich um einen Grauwert, wobei ein niedriger Grauwert einem dunklen, ein hoher Grauwert einem hellen Pixel entspricht. Für die hierin diskutierten Aspekte ist eine farbige Auflösung nicht notwendig, da sich die Bildanalyse primär auf Intensitätswerte bezieht.

Die Aufnahmerichtung 5a schließt mit der Auflageebene 17a einen Winkel 5b ein. Im beispielhaften Fall der Fig. 1 verläuft die Aufnahmerichtung 5a senkrecht zur Haupterstreckungsrichtung 13a der Auflagestege 13. Der Winkel 5b liegt beispielsweise im Bereich von 10° bis 70°, insbesondere kann er größer als 45° sein, beispielsweise bei 60° liegen. Abweichungen von der senkrechten Ausrichtung bezüglich der Haupterstreckungsrichtung liegen beispielsweise bei ±20°.

Mittels der (gestrichelt dargestellten) Beleuchtungseinrichtung 7 kann die Palette 3 optional zusätzlich mit infrarotem Licht, beispielsweise mit Licht im Nah-Infrarot-Frequenzspektrum von 845 nm bis 855 nm und/oder 935 nm bis 945 nm, in einer Beleuchtungsrichtung 7a beleuchtet werden. Die Beleuchtungsrichtung 7a schließt dabei mit der Auflageebene 17a einen Winkel 7b ein. Der Winkel 7b ist beispielsweise kleiner als 30° und liegt insbesondere in einem Bereich von 10° bis 20°, beispielsweise bei ca. 15°. Die Beleuchtungseinrichtung 7 beleuchtet die Auflagestege 13 von "hinten", strahlt also auf die - bezüglich der Kamera 5 - Rückseiten der Auflagestege 13. Entsprechend schließt die (senkrecht zur Auflageebene 17a) in die Auflageebene 17a projizierte Beleuchtungsrichtung 7a mit der Haupterstreckungsrichtung 13a der Auflagestege 13 einen Winkel 7c ein. Der Winkel 7c ist beispielsweise kleiner als 30° und liegt insbesondere in einem Bereich von 10° bis 25°, beispielsweise bei ca. 15°.

Weitere Beleuchtungsrichtungen können mit weiteren Beleuchtungseinrichtungen vorgesehen werden; beispielsweise ist eine zusätzliche Beleuchtungseinrichtung 7' in Fig. 1 gezeigt. Mehrere Beleuchtungseinrichtungen erlauben es, die Auflagestege gleichmäßiger auszuleuchten. Dabei ist zu berücksichtigen, dass eine Beleuchtungseinrichtung nicht direkt auf die Kamera einstrahlt, um eine Übersättigung der Kamera ("Blenden der Kamera") zu vermeiden. Zusätzlich kann die Kamera 5 in Kombination mit einem Frequenzfilter verwendet werden, das einen gezielt ausgewählten Spektralbereich transmittiert.

Die Flachbettwerkzeugmaschine 1 ist dazu eingerichtet, ein Verfahren zum Erfassen der Einhängepositionen 15 der Auflagestege 13 zu ermöglichen. Die dazu notwendigen Berechnungen zur Bildverarbeitung können beispielsweise mit dem Prozessor 9 der Auswertevorrichtung 11 durchgeführt werden. Entsprechend ist die Kamera 5 und optional die Beleuchtungseinrichtung 7 mit dem Prozessor 9/der Auswertevorrichtung 11 zum Empfangen von Daten (Bilddatensätzen) und zum Ansteuern derselben (Auslösen der Bildaufnahme oder der Beleuchtung) verbunden. Die Auswertevorrichtung 11 kann als PC, Rechenknoten oder ähnliche geeignete Hardware und insbesondere als Teil der Steuerungseinheit ausgebildet werden, die die Ansteuerung der Flachbettwerkzeugmaschine 1 durchführt. Die Auswertevorrichtung 11 kann somit als Teil eines übergeordneten oder lokalen Steuerungssystems der Flachbettwerkzeugmaschine oder als eigene Einheit ausgebildet sein. Die Auswertevorrichtung 11 ist insbesondere dazu eingerichtet, während eines Echtzeit-Betriebs der Flachbettwerkzeugmaschine 1 das Verfahren zur Bestimmung der Einhängepositionen durchzuführen/zu kontrollieren. Hierzu weist das zugrundeliegende Rechensystem beispielsweise digitale Prozessorsysteme mit Dateneingänge und Steuerungsausgänge aufweisenden Mikroprozessorkreisen sowie Datenbänke auf, die gemäß computerlesbaren, auf einem computerlesbaren Medium gespeicherten, Anweisungen betrieben werden. Die Anweisungen umfassen beispielsweise Computerroutinen für Fourier-Transformationen, Filterungen und Bildanalysen. Die Auswertevorrichtung 11 kann eine hohe Rechenleistung für die Echtzeitunterstützung bereitstellen. Sie kann ferner einen Langzeit- (nicht volatilen) Speicher zum Speichern der Programmanweisungen als auch einen sehr schnellen Kurzzeit- (volatilen) Speicher zum (Zwischen-) Speichern von erfassten Daten und von während der Durchführung des Verfahrens erzeugten Datensätzen aufweisen.

Das Verfahren zum Erfassen der Einhängeposition 15 des Auflagestegs betrifft eine Palette 3, die wie zuvor beschrieben mit einer Mehrzahl von Auflagestegen 13 entlang einer Längsrichtung der Palette 3 bestückt ist. Jeder der Auflagestege 13 weist entlang der Haupterstreckungsrichtung 13a, die quer zur Längsrichtung ausgerichtet ist, mehrere Auflagestegspitzen 17 auf. Die Auflagestegspitzen 17 definieren die Auflageebene 17a. Wie in Fig. 2 gezeigt umfasst das Verfahren die folgenden Schritte, die zumindest teilweise als ein computerimplementiertes Verfahren umgesetzt werden können:

In einem Schritt 100 wird ein zweidimensionaler, eine Mehrzahl von Bildpixel aufweisender Kontrastbilddatensatz der Palette 3 erstellt. Dabei wird jedem Bildpixel ein Pixelwert und eine Pixelflächeneinheit der Auflageebene 17a zugeordnet und der Kontrastbilddatensatz umfasst Bereiche, die den Auflagestegspitzen 17 zugeordnet sind, als lokale Pixelwert-Extrema in einem einheitlichen Pixelwert-Untergrund.

In einem Schritt 200 wird eine Längsposition derjenigen Bereiche, die den Auflagestegspitzen 17 eines der Mehrzahl von Auflagestegen 13 zugeordnet sind, im Kontrastbilddatensatz anhand der lokalen Pixelwert-Extrema bestimmt.

In einem Schritt 300 wird die Einhängeposition 15 des Auflagestegs 13 in der Palette 3 anhand der Längsposition im Kontrastbilddatensatz und einem Ausmaß der Pixelflächeneinheit in der Längsrichtung abgeleitet.

Nachfolgend werden beispielhaft zwei Ansätze beschrieben, mit denen ein Kontrastbilddatensatz erstellt werden kann (vgl. Schritt 100).

Zunächst wird im Zusammenhang mit den Figuren 3 bis 6 erläutert wie die Erstellung eines Kontrastbilddatensatzes 23 mittels Fourier-Transformation erfolgt. Im Anschluss wird anhand der Figuren 7 und 8 die Erstellung mittels Dunkelfeld-Beleuchtung und Dunkelfeld-Aufnahme beschrieben. Vorteile der Fourier-Transformation sind die flexible Anwendung und Einbindung in bereits existierenden Aufnahmesysteme, da oft bereits zur Verfügung stehende Bilddaten verwendet werden können. Im Gegensatz zu dieser rechenintensiven Umsetzung benötigt der Dunkelfeld-Ansatz im Wesentlichen ein unabhängiges Kamera-System mit optional eigener Beleuchtung. Die Datenverarbeitung ist bei dem Dunkelfeld-Ansatz dagegen wesentlich vereinfacht. Gemeinsames Ziel der Ansätze ist dabei die Bereitstellung eines Kontrastbilddatensatzes, in dem die Auflagestegspitzen 17 möglichst hervorgehoben, in den Beispielen als "möglichst helle Bereiche" in einem ansonsten möglichst schwarzen Bild (oder in einer zufälligen Pixelwertverteilung um einen konstanten Pixelwert) dargestellt sind.

Beide Ansätze gehen von einem Bild der Palette aus, wenn diese in der Werkzeugmaschine oder auf dem Palettenwechsler stillsteht. Bevorzugt ist die Palette überdies möglichst vollständig leer. Dieses Ausgangsbild wird perspektivisch transformiert, sodass die Auflagestege in einer der Aufreihungsrichtungen der Pixel (vertikal oder horizontal im Bild) strichähnlich erscheinen. Das Ausgangsbild kann ferner aus mehreren Kamerabildern zusammengesetzt werden.

Fig. 3 zeigt ein von der Kamera 5 im sichtbaren Spektrum erzeugtes zweidimensionales Kamerabild 21 der Palette mit mehreren Auflagestegen entlang der Haupterstreckungsrichtung 13a, die in Fig. 1 der y-Richtung entspricht. Teilweise erkennt man ferner Bereiche des Palettenrahmens, dessen Längsseiten 3a sich in einer Längsrichtung (gemäß Fig. 1 als x-Richtung gekennzeichnet) und dessen Endseiten 3b sich entlang der Haupterstreckungsrichtung 13a erstrecken.

Das Kamerabild 21 weist eine Mehrzahl von Bildpixel auf, denen jeweils ein Grauwert zugeordnet ist. Das Kamerabild 21 wurde schräg von oben aufgenommen, sodass mit zunehmendem Abstand der Auflagestege von der Kamera 5 nicht nur die Oberkante, sondern zunehmend auch die der Kamera zugewandten Seitenflächen der Auflagestege im Kamerabild 21 zu sehen sind. Mit anderen Worten sind im Kamerabild 21 perspektivisch bedingt die einzelnen Auflagestege 13 abhängig von ihrer Lage in der Auflageebene 17a, insbesondere der Einhängeposition in Längsrichtung, unterschiedlich dargestellt: Die Auflagestege im linken Randbereich des Kamerabildes 21 erscheinen wegen des relativ steilen Aufnahmewinkels nahezu in Draufsicht und erscheinen somit strichartig (nur die Oberseite wird wahrgenommen). Die Auflagestege im rechten Randbereich des Kamerabildes 21 erscheinen wegen des relativ flachen Aufnahmewinkels in einer Art Schrägansicht, wodurch deren plattenförmigen Seitenflächen wahrgenommen werden.

Da das Kamerabild 21 jedoch beispielsweise mittels der oben erwähnten Methode der Homographie entzerrt wurde, ist jedem Bildpixel eine quadratische, gleichgroße Pixelflächeneinheit der Auflageebene 17a zugeordnet, sodass das Kamerabild 21 diesbezüglich einer verzerrungsfreien Aufsicht (Vogelperspektive) entspricht, auch wenn der Bildinhalt aufgrund der schrägen Aufnahmerichtung hiervon abweicht.

Ferner ist in dem Kamerabild 21 die in Fig. 1 gezeigte Referenzstruktur 19a als Referenzpixelanordnung 19b zu erkennen. Die Referenzpixelanordnung 19b kann mittels Bildanalyseverfahren (z.B. Template-Matching-Bildanalyse, siehe unten) identifiziert werden.

Der Beleuchtungssituation geschuldet kann die Auflageebene 17a ungleichmäßig ausgeleuchtet sein, was sich darin niederschlägt, dass einige Bereiche der Auflagestege 13 deutlich heller erscheinen als andere. Allgemein erkennt man eine stark strukturierte Grauwert Verteilung im Kamerabild 21.

Ferner können sich die einzelnen Auflagestege 13 in unterschiedlichen Zuständen bezogen auf Verschleiß, Verschlackung und Oberflächenzustand befinden. So können einzelne Auflagestegspitzen (an-) geschmolzen und/oder verformt sein.

Im Rahmen der Bildverarbeitung Fourier-transformiert der Prozessor 9 das auf einen Ortsraum bezogene Kamerabild 21 der Fig. 3 in einen auf einen Frequenzraum bezogenen Transformationsfrequenzdatensatz 21a.

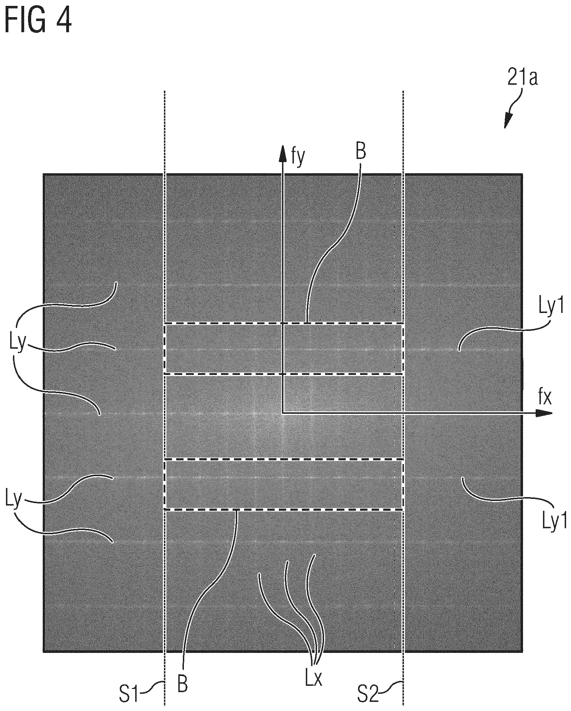

Fig. 4 zeigt den Transformationsfrequenzdatensatz 21a in einer sogenannten Amplitudenfrequenzdarstellung, bei der die Helligkeit eines einzelnen Bildpunktes ein Maß für den Betrag der Amplitude (Betragsquadrat) der jeweiligen Frequenz darstellt. Die Frequenzachsen (fx-Achse und fy-Achse) stellen die Ortsfrequenzen in den beiden orthogonalen Analyserichtungen (x-Richtung, y-Richtung) dar. In Fig. 4 haben die beiden Frequenzachsen fx, fy jeweils ihren Ursprung in der Mitte (Koordinatenursprung).

Bedingt durch die Natur der Fourier-Transformation und die regelmäßige periodische Anordnung der Auflagestegspitzen 17 und der Auflagestege 13 zueinander sind deutliche hellere Bereiche mit lokalen Helligkeitsextrema (Peaks) im Betragsquadrat der Amplitude sichtbar. Beispielsweise wurden "horizontale" Linien Lx in fx-Richtung und vertikale Linien Ly in fy-Richtung in Fig. 4 beschriftet. Diese helleren Bereiche gehen auf die Geometrie der Auflagestege 13, insbesondere auf die sich wiederholende Struktur der Auflagestegspitzen 17 in der Haupterstreckungsrichtung 13a und/oder auf die Regelmäßigkeit der Einhängepositionen 15 in der Längsrichtung, zurück.

Unter Berücksichtigung der möglichen Geometrie der bestückten Auflagestege der Palette kann beispielsweise eine binäre Filterung des Transformationsfrequenzdatensatzes 21a vorgenommen werden.

Die im Spitzenabstand 17b voneinander entfernt vorliegenden Auflagestegspitzen 17 bilden im Kamerabild 21 (im Ortsraum) ein sich entsprechend der Haupterstreckungsrichtung 13a erstreckendes periodisches, sich regelmäßig wiederholendes Muster aus. Diesem kann im Transformationsfrequenzdatensatz 21a eine Spitzenwiederholungsfrequenz (eine Ortsfrequenz in y-Richtung) zugeordnet werden. Die Spitzenwiederholungsfrequenz ist dabei durch die beiden horizontalen, dem Koordinatenursprung nächstliegenden und von diesem gleichbeabstandeten Linien Ly1 in Fig. 4 repräsentiert. Die Spitzenwiederholungsfrequenz ergibt sich aus:

$$\frac{h*\Delta x}{d},$$

mit

h: Anzahl der Pixel des im Kamerabild 21 dargestellten Bereichs der Auflageebene 17a in Haupterstreckungsrichtung 13a,

$\Delta$x: Ausmaß der Pixelflächeneinheit in der Haupterstreckungsrichtung 13a und

d: Spitzenabstand 17b benachbarter Auflagestegspitzen 17.

Beispielhafte Werte sind: $\Delta$x = 1 mm, z.B. h = 1600 Bildpixel und d = 16 mm, sodass sich eine Spitzenwiederholungsfrequenz von 100 Bildpixel ergibt.

Zur Hervorhebung der Spitzenwiederholungsfrequenz kann der Transformationsfrequenzdatensatz 21a gefiltert werden, d.h., der Transformationsfrequenzdatensatz 21a wird auf ein Frequenzband beschränkt. Ein gefilterter Transformationsfrequenzdatensatz erstreckt sich z.B. in einer festgelegten Frequenzbandbreite um die Spitzenwiederholungsfrequenz. In Fig. 4 werden beispielhaft zwei Frequenzbänder entlang der Linien Ly1 ausgewählt.

In diesem Zusammenhang haben die Erfinder ferner erkannt, dass das nachgelagerte Bestimmen (Schritt 200 in Fig. 2) der Position der den Auflagestegspitzen zugeordneten Bereiche im Kontrastbilddatensatz schnell und verlässlich erfolgen kann, wenn hochfrequente, fx-Ortsfrequenzen, deren Amplitudenbeitrag vernachlässigt werden kann (in Fig. 4 veranschaulicht als die Frequenzen links und rechts der gestrichelten Linien S1, S2) aus dem Transformationsfrequenzdatensatz 21a entfernt werden.

Der so gefilterte und beschränkte Transformationsfrequenzdatensatz 21a umfasst beispielsweise nur die Amplitudenwerte in den Rechtecken B, indem z.B. die Amplitudenbeiträge der verbleibenden Frequenzen auf Null gesetzt wurden. In einer Darstellung analog zur Fig. 4 wären die Bereiche außerhalb der Rechtecke B entsprechend schwarz dargestellt.

Anschließend transformiert der Prozessor 9 den gefilterten Transformationsfrequenzdatensatz 21a mittels inverser Fourier-Transformation zurück in den Ortsraum.

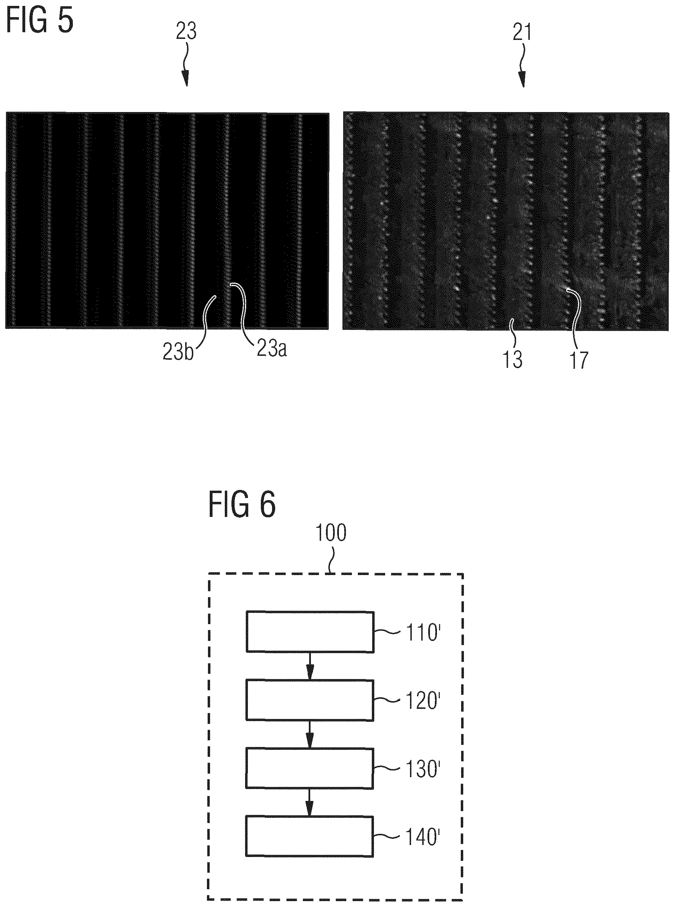

Dadurch, dass der Transformationsfrequenzdatensatz 21a auf das Frequenzband um die Spitzenwiederholungsfrequenz beschränkt wurde und somit alle Frequenzen außerhalb des Frequenzbandes unterdrückt (gefiltert) werden, kann durch das anschließende Rücktransformieren des gefilterten Transformationsfrequenzdatensatz 21a ein (auf den Bildraum bezogener) Kontrastbilddatensatz 23 (sieh Fig. 5) erzeugt werden. In dem Kontrastbilddatensatz 23 sind die Auflagestegspitzen 17 hervorgehoben und andere "störende" Strukturen oder Texturen zumindest im Wesentlichen unterdrückt. Der Kontrastbilddatensatz 23 stellt entsprechend die Bereiche der Auflagestegspitzen 17 als lokale Pixelwert-Extrema 23a in einem einheitlichen Pixelwert-Untergrund 23b da. Es ergibt sich also ein rücktransformierter Bilddatensatz, der als Kontrastbilddatensatz 23 für eine weitere Bildanalyse ausgegeben werden kann.

Fig. 5 veranschaulicht diese "störungsreduzierende" Wirkung, indem es jeweils einen Ausschnitt (rechte Figurenseite) aus dem zweidimensionalen Kamerabild 21 der Palette gemäß Fig. 3 und einen Ausschnitt (linke Figurenseite) des daraus mittels Fourier-Transformation erzeugten Kontrastbilddatensatzes 23 nebeneinanderstellt. Man erkennt mehrere gut strukturierte lineare Aufreihungen von hellen Bereichen, die den Auflagestegspitzen jeweils eines Auflagestegs entsprechen. Es wird angemerkt, dass im dargestellten Ausschnitt die Aufreihungen gleichbeabstandet voneinander verlaufen (d.h., jede Einhängeposition wurde genutzt).

Fig. 6 verdeutlicht den Schritt 100 des Erstellens des Kontrastbilddatensatzes 23 mittels Fourier-Transformation. Die zugrundeliegende Bildverarbeitung umfasst die folgenden Schritte, die zumindest teilweise als computerimplementiertes Verfahren umgesetzt werden können:

In einem Schritt 110' wird ein zweidimensionales Kamerabild 21 der Palette 3 aufgenommen. Teil des Aufnahmevorgangs ist eine Entzerrung, die derart vorgenommen wird, dass den Bildpixeln des Kamerabilds 21, die in Reihen und Spalten angeordnet sind, jeweils die gleiche Pixelflächeneinheit der Auflageebene 17a zugeordnet ist. Die Entzerrung kann beispielsweise mithilfe des Prozessors 9 der Auswertevorrichtung 11 basierend auf den Bilddaten des Anfangsbildes berechnet werden oder zumindest teilweise optisch vorgenommen werden.

In einem Schritt 120' wird das Kamerabild 21 in einen Frequenzraum Fourier-transformiert und als ein Transformationsfrequenzdatensatz 21a ausgegeben.

In einem Schritt 130' wird der Transformationsfrequenzdatensatz 21a zur Hervorhebung von Frequenzen im Frequenzraum, die zu den Bereichen gehören, die den Auflagestegspitzen 17 zugeordnet sind, gefiltert.

In einem Schritt 140' erfolgt eine Fourier-Rücktransformation des gefilterten Transformationsfrequenzdatensatzes 21a mittels inverser Fourier-Transformation, sodass ein rücktransformierter Bilddatensatz als Kontrastbilddatensatz 23 ausgegeben werden kann.

Im nachfolgend zweiten erläuterten Ansatz wird ein Kontrastbilddatensatz mittels einer Dunkelfeld-Aufnahme, optional mit Dunkelfeld-Beleuchtung, erstellt. Hierfür kann wie in Fig. 1 dargestellt die Palette 3 durch eine oder mehrere Beleuchtungseinrichtung 7, 7' mit Licht des Nah-Infrarot-Frequenzspektrums aus der Beleuchtungsrichtung 7a beleuchtet werden.

Die Umsetzung des Dunkelfeld-Ansatzes (Dunkelfeld-Strategie) zum Erstellen eines Kontrastbilddatensatzes der Palette 3 kann berücksichtigen, dass der Raum oberhalb der Palette 3 für Be- und Entladeprozesse zur Verfügung stehen sollte. Beispielsweise kann wie in Fig. 1 gezeigt die Kamera 5 über einen Kameraarm 5' an einer Rückwand der Flachbettwerkzeugmaschine 1 angebracht werden.

Die Beleuchtungseinrichtung 7 kann dann die Auflagestegspitzen 17 seitlich und von oben beleuchten, damit reflektiertes und gestreutes Licht nach oben zur Kamera 5 abgelenkt wird. Ferner sollte die Beleuchtungseinrichtung 7 nicht in einem zu steilen Winkel von oben auf die Palette gerichtet sein, da andernfalls Gegenstände (z.B. Materialverschnitt), die sich unter der Palette 3 befinden, beleuchtet werden könnten und Teil des Bildes werden. Des Weiteren sollte die Beleuchtungseinrichtung 7 nicht die der Kamera 5 zugewandten Seitenflächen der Auflagestege 13 beleuchten. Die Beleuchtungseinrichtung 7 kann bevorzugt seitlich, in einem flachen Winkel von oben und hinten (d. h. von der der Kamera 5 gegenüberliegenden Seite aus) erfolgen. Die Beleuchtungseinrichtung 7 kann beispielsweise in einem Abstand von 40 cm von der Palette positioniert werden. Für eine Beleuchtungseinrichtung 7 trifft die Dunkelfeld-Beleuchtung auf weiter von der Beleuchtungseinrichtung 7 entfernt liegende Auflagestegspitzen 13 unter einem flacheren Winkel.

Ferner wird angemerkt, dass es zu teilweise starken Blendflecken ("Blenden der Kamera") kommen kann, wenn Licht direkt von der Beleuchtungseinrichtung 7 in die Kamera 5 gelangen kann. Dies kann der Fall sein, wenn sich die Beleuchtungseinrichtung 7 auf der der Kamera 5 gegenüberliegenden Seite der Palette 3 befindet. Um dies zu vermeiden, kann die Beleuchtungseinrichtung 7 mit entsprechenden Abdeckungen versehen werden. Wie erwähnt können für eine gleichmäßige Beleuchtung der gesamten Auflageebene der Palette 3 mehrere Beleuchtungseinrichtungen 7, 7' vorgesehen sein.

Fig. 7 zeigt ein beispielhaftes Ergebnis der Dunkelfeld-Aufnahme in Form eines Dunkelfeld-Kamerabildes der Palette 3, das im Nah-Infrarot-Frequenzspektrum aus der Aufnahmerichtung 5a mittels der Kamera 5 aufgenommen wurde. Das Dunkelfeld-Kamerabild kann direkt (nach Entzerrung) als Kontrastbilddatensatzes 23' für die weitere Bildanalyse verwendet werden. Alternativ wäre es auch möglich das Dunkelfeld-Kamerabild gemäß dem weiter oben beschriebenen Verfahren unter Einsatz einer Fourier-Transformation zu filtern und erst den gefilterten und zurücktransformierten Bilddatensatz als Kontrastbilddatensatz als Grundlage für die Schritte 200 und 300 zu verwenden.

In dem gezeigten Beispiel wurde die Kamera 5 mit einem Schmalbandfilter mit einer maximalen Durchlässigkeit von über 90% im Nah-Infrarot-Frequenzspektrum versehen. Wie in Fig. 7 erkennbar sind im Kontrastbilddatensatz 23' (im Wesentlichen) nur die Auflagestegspitzen 17 sowie einige zu den Auflagestegspitzen 17 führende Flanken als helle Bereiche in einem ansonsten weitestgehend schwarzen Bild erkennbar.

Das Flussdiagramm der Fig. 8 verdeutlicht den Schritt 100 des Erstellens des Kontrastbilddatensatzes mittels eines Dunkelfeld-Kamerabildes. Die zugrundeliegende Bildaufnahme umfasst die folgenden Schritte, die zumindest teilweise als computerimplementiertes Verfahren umgesetzt werden können:

In einem Schritt 105" (optional) wird die Palette 3 von oben mit Licht eines Nah-Infrarot-Frequenzspektrums, insbesondere im Frequenzspektrum von 845 nm bis 855 nm und/oder von 935 nm bis 945 nm, aus einer oder aus mehreren Beleuchtungsrichtungen 7a beleuchtet. Mindestens eine der Beleuchtungsrichtungen 7a kann unter den oben angegebenen Winkeln 7a, 7b mit der Auflageebene erfolgen.

In einem Schritt 110" wird der Kontrastbilddatensatz 23' durch Erzeugen eines Dunkelfeld-Kamerabildes der Palette 3 im Nah-Infrarot-Frequenzspektrum aus einer Aufnahmerichtung 5a erzeugt. Die Dunkelfeld-Aufnahme kann unter den oben angegebenen Winkeln 5a, 5b mit der Auflageebene und der Haupterstreckungsrichtung erfolgen.

Mit anderen Worten kann in einer bevorzugten Ausführungsform eine Flachbettwerkzeugmaschine mit einer Nah-Infrarot (NIR)-Beleuchtung für eine zur Bearbeitung einzusetzenden Palette sowie einer Kamera mit einem Schmalbandfilter ausgerüstet werden. Mit dem Schmalbandfilter lässt sich der Einfluss von Umgebungslicht verhindern. Wird die Kamera am Gehäuse der Flachbettwerkzeugmaschine und die Beleuchtung entlang der Längserstreckung der Palette so installiert, dass die Auflagestege schräg von hinten beleuchtet werden, entsteht eine Dunkelfeld-Aufnahme, in der die Spitzen und Flanken der Auflagestege hell dargestellt werden und der Rest des Bildes dunkel ist.

Ist der Kontrastbilddatensatz 23, 23' erstellt, erfolgt mittels einer Bildanalyse das Bestimmen der Positionen der den Auflagestegspitzen 17 zugeordneten Bereiche im Kontrastbilddatensatz 23, 23'. Dies kann zum Beispiel mithilfe einer Parallelprojektion zur Bildanalyse des Kontrastbilddatensatzes 23, 23' oder mit einer Template-Matching-Bildanalyse erfolgen. Andere komplexere Bildanalysemethoden wie eine Sliding-Window-Approach-Bildanalyse, eine SIFT-Algorithmus-basierte Bildanalyse oder eine auf neuronalen Netzen basierende Bildanalyse können ebenfalls genutzt werden.

Schematisch ist in Fig. 7 das Ergebnis einer Parallelprojektion entlang der Haupterstreckungsrichtung 13a am unteren Bildrand angedeutet. Durch Aufsummieren der Pixelwerte in y-Richtung (die Grauwerte des Bildes werden spaltenweise in Richtung der Haupterstreckungsrichtung 13a addiert) ergibt sich ein Intensitätsprofil 31 in x-Richtung, d.h. entlang der Längserstreckung der Palette 3. Man erkennt eine Mehrzahl von Maxima 31a im Intensitätsprofil.

Stark reflektierende Kanten an den Auflagestegen oder Schneidbutzen können zu Fehlidentifikationen führen. Diese können z.B. erkannt werden, indem für einen Kandidaten (einen entsprechenden Bereich des Intensitätsprofils 31) geprüft wird, wie stark die Grauwerte in der Haupterstreckungsrichtung 13a schwanken. Beispielsweise können die Grauwerte in einem Bereich der x-Achse um den Kandidaten (z.B. in einem Bereich von +/- 20 Bildpixel um ein Maximum) entlang der x-Achse aufaddiert werden (Parallelprojektion quer zur Hauptstreckungsrichtung). Alternativ oder ergänzend kann, um schnell einen Kandidaten als Fehlidentifikation zu klassifizieren, der Durchschnitt der Grauwertschwankungen entlang der y-Achse berechnet werden. Wenn dieser Durchschnitt unterhalb eines vorher festgelegten Schwellwerts ist, handelt es sich um eine Fehlidentifikation.

Zusätzlich wurde in Fig. 7 verdeutlicht, dass die Auflagestege gleichbeabstandet eingehängt werden können. Fällt eine der Einhängepositionen 15 mit einem Intensitätsmaximum im Intensitätsprofil zusammen, wird die entsprechende Einhängeposition mit einer "1" (Einhängeposition gerüstet) gekennzeichnet. Fehlt ein Intensitätsmaximum bei einer Einhängeposition 15 wurde diese mit einer "0" gekennzeichnet (kein Auflagesteg 13 eingehängt). Man erkennt im Fall der Fig. 7, dass nicht jede Einhängeposition 15 genutzt wurde, d.h., es wurde nicht jede Einhängeposition 15 mit einem Auflagesteg 13 gerüstet.

Ein ähnliches Intensitätsprofil einer Parallelprojektion quer zur Hauptstreckungsrichtung 13a, das auf einen engeren Bereich um die Auflagestegspitzen beschränkt wird (bspw. +/- 4 Bildpixel), kann ferner dazu benutzt werden, einzelne Auflagestegspitzen in y-Richtung zu identifizieren. Dafür können wieder die Maxima des Signals (Summe der Grauwerte) bestimmt werden.

Dies ist ebenfalls in Fig. 7 angedeutet. Für einen Auflagesteg 13 wurde eine Parallelprojektion in x-Richtung vorgenommen, um die exakte Position einer Auflagestegspitze 17 zu erfassen. Ein entsprechendes Intensitätsprofil 35 in y-Richtung wurde mit einigen Maxima 35a in Fig. 7 eingezeichnet. Aus der x-Position der Einhängeposition (eines Maximum 31a) und der y-Position eines der Maxima 35a im Intensitätsprofil 35 ergibt sich die zweidimensionale Position einer zugehörigen Auflagestegspitze 17. Eine Auflagestegspitze 37 ist exemplarisch anhand der x-Position und der y-Position in Fig. 7 angedeutet. Diese Positionen der Auflagestegspitzen 17 können beispielsweise dem Schneidprozess zugrunde gelegt werden, indem die geplante Anordnung von zu schneidenden Werkstücken die Positionen der Auflagestegspitzen 17 berücksichtigt.

Der in Zusammenhang mit dem Dunkelfeld-Kamerabild vorgestellte Ansatz der Parallelprojektion kann analog auf den Bilddatensatz 23 angewandt werden.

Fig. 9 zeigt ein Template 25 für eine Template-Matching-Bildanalyse. Das Template 25 zeigt Bereiche 27 mit leicht erhöhten Pixelwerten, die im Template den Auflagestegspitzen und optional zu den Auflagestegspitzen führenden Flanken gehören. Üblicherweise kann ein Template aus einer Mehrzahl von Bildern extrahiert werden. Das Template 25 kann z.B. aus einem Bilddatensatz eines eine Mehrzahl von Auflagestegspitzen 17 aufweisenden Auflagestegs 13 gewonnen werden. Beispielsweise kann es aus einem Innenbereich der Palette 3 gewonnen werden, da die dort angeordneten Auflagestege 13 quasi als Mittelwert für alle Auflagestege 13 angesehen werden können. Auch das Template 25 kann mithilfe der Fourier-Hin-Transformation und Fourier-Rück-Transformation, optional mit entsprechender Filterung, erstellt werden.

Wie in Fig. 9 ferner gezeigt ist, kann ein Template beispielsweise asymmetrisch hinsichtlich der Bereiche 27 eingesetzt werden, um vorliegende Strukturinformationen zu berücksichtigen und ein fehlerhaftes Erkennen einer "Stegsenke" als "Stegspitze" zu verhindern. Letzteres ist insbesondere dann der Fall, wenn der Auflagesteg im Anfangsbild seitlich gesehen wird, d. h. keine Linie bildet). Ein asymmetrisches Template kann dann derart gewählt werden, dass ein Bereich ohne Fourier-Bandpass-Filterantwort neben dem detektierten Signal erforderlich ist. Bei einer Stegsenke wären dort die Spitzen zu sehen, sodass nur die Auflagestegspitzen eine hohe Übereinstimmung mit dem Template 25 liefern.

Bei der Template-Matching-Bildanalyse umfasst das Bestimmen der Positionen der den Auflagestegspitzen 17 zugeordneten Bereiche im Kontrastbilddatensatz 23, 23' das Durchführen einer Abgleich-Operation unter Verwendung des Templates 25 hinsichtlich vergleichbar großer Abschnitte des Kontrastbilddatensatzes 23, 23'. Als Ergebnis der Positionsbestimmung mit dem Template 25 erhält man primär die x-Positionen des Templates, die zu hohen Übereinstimmungen mit dem Kontrastbilddatensatz 23, 23' führen. Diese Positionen entsprechen dann den Einhängepositionen 15 der Auflagestege 13. Je nach Qualität des Templates und der Kontraststärke des Templates 25 und des Kontrastbilddatensatzes 23, 23' können ferner die jeweilige Positionen der Auflagestegspitzen 17 entlang der Hauptstreckungsrichtung 13a erfasst werden.

Auch bei der Template-Matching-Bildanalyse ist für das Bestimmen der Einhängepositionen 15 ferner die Zuordnung des Kontrastbilddatensatzes 23, 23' zur realen Position der möglichen Einhängepositionen 15 in der Palette 3 einzubeziehen, wie dies in Zusammenhang mit Fig. 7 hinsichtlich der Einhängepositionen 15 bereits erläutert wurde.

Mit anderen Worten, sind die Positionen der den Auflagestegspitzen 17 zugeordneten Bereiche im Kontrastbilddatensatz 23, 23' anhand der lokalen Pixelwert-Extrema 23a bestimmt (Schritt 200), können die entsprechenden Einhängepositionen 15 der Auflagestege 13 in der Palette 3 anhand der Positionen der den Auflagestegspitzen 17 zugeordneten Bereiche im Kontrastbilddatensatz 23, 23' und der Pixelflächeneinheit abgeleitet (Schritt 300) werden.

Dies kann beispielsweise für einen Auflagesteg 13 erfolgen, indem im Kontrastbilddatensatz 23 zunächst die Anzahl der Bildpixel zwischen der Referenzpixelanordnung 19b (siehe Fig. 3) und einer x-Position der den Auflagestegspitzen 17 des Auflagestegs 13 zugeordneten Bereiche quer zur Hauptstreckungsrichtung 13a ermittelt wird. Anschließend wird aus der ermittelten Anzahl der Bildpixel mittels bekannter Ausmaße der den Bildpixeln zugeordneten Pixelflächeneinheiten (z.B. 1mm x 1 mm) ein entsprechender Abstand zwischen der (der Referenzpixelanordnung 19b zugeordneten) Referenzstruktur 19a und dem betreffenden Auflagesteg 13 ermittelt. Basierend auf dem ermittelten Abstand (zwischen Referenzstruktur 19a und dem betreffenden Auflagesteg 13) und bekannten Abständen zwischen der Referenzstruktur 19a und den (diskreten) möglichen Einhängepositionen 15 kann dem betreffenden Auflagesteg 13 eine Einhängeposition 15 zugeordnet und damit die Einhängepositionen 15 des Auflagestegs 13 in der Palette 3 bestimmt werden.

Vergleicht man die beiden beispielhaft vorgestellten Ansätze zur Erzeugung des Kontrastbilddatensatzes hat der Dunkelfeld-Ansatz den Vorteil, nicht von günstigem Umgebungslicht abhängig zu sein. Ein weiterer Vorteil liegt darin, dass der Boden unter der Palette 3 und die Vorderseite der Auflagestege 13 nicht beleuchtet wird. Dies führt zu geringeren Störungen im Bild. Entsprechend wird die Auswertung, ob ein Auflagesteg an einer Einhängeposition 15 eingelegt ist, durch die Dunkelfeld-Aufnahme robuster. Es treten kaum Fehlklassifikationen ein. Auch die Auswertung der Positionen einzelner Auflagestegspitzen 17 auf einzelnen Bildern wird durch die Dunkelfeld-Aufnahme mit vertretbarer Fehlerrate möglich. Ferner ist die Durchführung des Verfahrens im Dunkelfeld-Ansatz wie auch im Fourier-Ansatz schnell, da die Aufnahme für die Dunkelfeld-/Fourier-Analyse in Bruchteilen einer Sekunde vorgenommen werden kann.

Im Fall der Fourier-Bildanalyse kann aus dem Anfangsbild direkt und ohne weitere Hilfsmittel, wie z.B. die spezifische Dunkelfeld-Beleuchtung, eine aktuelle Auflagestegbelegung der Palette extrahiert werden. Auch in diesem Fall entstehen, anders als bei scannenden Verfahren, kaum Verlustzeiten, da die Palette wie erwähnt kurz vor dem Auflegen eines neuen Blechs leer ist. Die Fourier-Bildanalyse Bedarf bei der Umsetzung lediglich einer geeigneten Datenverarbeitungsumgebung zur Berechnung der beschriebenen Transformationen. Die Berechnungen können auf der Steuerung der Werkzeugmaschine durchgeführt werden oder auf einen externen Server ausgelagert werden. Es wurden Genauigkeiten von 96 % und mehr erreicht.

## Patentansprüche

1. Verfahren zum Erfassen einer Einhängeposition (15) eines Auflagestegs (13) in einer Palette (3), die zur Verwendung mit einer Flachbettwerkzeugmaschine (1), insbesondere einer Laserschneid- oder Plasmaschneid-Flachbettwerkzeugmaschine, mit einer Mehrzahl von Auflagestegen (13) entlang einer Längsrichtung (x) bestückt ist, wobei jeder der Auflagestege (13) entlang einer Haupterstreckungsrichtung (13a), die quer zur Längsrichtung einer Palette (3) ausgerichtet ist, mehrere Auflagestegspitzen (17) aufweist und die Auflagestegspitzen (17) der Mehrzahl von Auflagestegen (13) eine Auflageebene (17a) definieren, **gekennzeichnet durch** die Schritte:

- Erstellen (100) eines zweidimensionalen, eine Mehrzahl von Bildpixel aufweisenden Kontrastbilddatensatzes (23, 23') der Palette (3), wobei jedem Bildpixel ein Pixelwert und eine Pixelflächeneinheit der Auflageebene (17a) zugeordnet ist und der Kontrastbilddatensatz (23, 23') Bereiche, die den Auflagestegspitzen (17) zugeordnet sind, als lokale Pixelwert-Extrema (23a) in einem einheitlichen Pixelwert-Untergrund (23b) umfasst,
- Bestimmen (200) einer Längsposition im Kontrastbilddatensatz (23, 23') von denjenigen Bereichen, die den Auflagestegspitzen (17) eines der Mehrzahl von Auflagestegen (13) zugeordnet sind, unter Verwendung der lokalen Pixelwert-Extrema (23a) und
- Ableiten (300) der Einhängeposition (15) des Auflagestegs (13) in der Palette (3) anhand der Längsposition im Kontrastbilddatensatz (23) und einem Ausmaß der Pixelflächeneinheit in der Längsrichtung (x).

2. Verfahren nach Anspruch 1, wobei einer der den Auflagestegspitzen (17) zugeordneten Bereiche einer Auflagestegspitze (17) und/oder einer zu der Auflagestegspitze (17) führende Flanke zugeordnet ist.

3. Verfahren nach einem der vorhergehenden Ansprüche, wobei der einheitliche Pixelwert-Untergrund (23b) keine Struktur darstellt und/oder Bildpixel umfasst, die einen konstanten Pixelwert oder eine zufällige Pixelwertverteilung um einen konstanten Pixelwert aufweisen.

4. Verfahren nach einem der vorhergehenden Ansprüche, wobei das Erstellen (100) des Kontrastbilddatensatzes (23, 23') der Palette (3) ferner umfasst:

- Erzeugen (110') eines zweidimensionalen Kamerabildes (21) der Palette (3) im sichtbaren und/oder infraroten Spektrum, wobei das Kamerabild (21) die in Reihen und Spalten angeordneten Bildpixel aufweist, denen jeweils die Pixelflächeneinheit der Auflageebene (17a) zugeordnet ist,
- Fourier-Transformieren (120') des Kamerabildes (21) in einen Frequenzraum und Ausgeben eines Transformationsfrequenzdatensatzes (21a),
- Filtern (130') des Transformationsfrequenzdatensatzes (21a) zur Hervorhebung von Frequenzen im Frequenzraum, die zu den Bereichen gehören, die den Auflagestegspitzen (17) zugeordnet sind, und

- Rücktransformieren (140') des gefilterten Transformationsfrequenzdatensatzes mittels inverser Fourier-Transformation in einen rücktransformierten Bilddatensatz und Ausgeben des rücktransformierten Bilddatensatzes als den Kontrastbilddatensatz (23).

5. Verfahren nach Anspruch 4, wobei benachbarte Auflagestegspitzen (17) in der Hauptstreckungsrichtung (13a) einen im Wesentlichen gleichen Spitzenabstand (17b) voneinander aufweisen, und wobei das Filtern (130') des Transformationsfrequenzdatensatzes (21a) umfasst:

- Identifizieren eines dem Spitzenabstand (17b) zugeordneten Frequenzbands im Frequenzraum, wobei das Frequenzband insbesondere um eine Spitzenwiederholungsfrequenz ausgebildet ist, die der Hauptstreckungsrichtung zugeordnet ist und sich insbesondere ergibt aus:

$$\frac{h * \Delta x}{d},$$

mit

h: Anzahl der Pixel des im Kamerabild (21) dargestellten Bereichs der Auflageebene (17a) in Hauptstreckungsrichtung (13a), $\Delta x$: Ausmaß der Pixelflächeneinheit in der Hauptstreckungsrichtung (13a) und d: Spitzenabstand (17b) benachbarter Auflagestegspitzen (17), und

- Beschränken des Transformationsfrequenzdatensatzes (21a) auf das Frequenzband.

6. Verfahren nach Anspruch 4 oder 5, wobei das Erzeugen (110") des zweidimensionalen Kamerabildes (21) durch Erzeugen eines Dunkelfeld-Kamerabildes der Palette (3) im Nah-Infrarot-Frequenzspektrum erfolgt und wobei das Dunkelfeld-Kamerabild aus einer Aufnahmerichtung (5a) aufgenommen wird, die mit der Auflageebene (17a) einen Winkel (5b) einschließt, der im Bereich von 10° bis 70° liegt, insbesondere größer als 45°, beispielsweise 60°, ist, und die sich unter einem Winkel in einem Bereich von 70° bis 110°, insbesondere senkrecht, zur Hauptstreckungsrichtung erstreckt.

7. Verfahren nach einem der Ansprüche 1 bis 3, wobei das Erstellen (100) des Kontrastbilddatensatzes (23) der Palette (3) ferner umfasst:

- Erzeugen (110") des Kontrastbilddatensatzes (23) durch Erzeugen eines Dunkelfeld-Kamerabildes der Palette (3) im Nah-Infrarot-Frequenzspektrum aus einer Aufnahmerichtung (5a), die mit der Auflageebene (17a) einen Winkel (5b) einschließt, der im Bereich von 10° bis 70° liegt, insbesondere größer als 45°, beispielsweise 60°, ist, und die sich unter einem Winkel in einem Bereich von 70° bis 110°, insbesondere senkrecht, zur Hauptstreckungsrichtung erstreckt.

8. Verfahren nach einem der vorhergehenden Ansprüche, wobei das Erstellen (100) des Kontrastbilddatensatzes (23) der Palette (3) ferner umfasst:

- Beleuchten (105") der Palette (3) von oben mit Licht eines Nah-Infrarot-Frequenzspektrums, insbesondere im Frequenzspektrum von 845 nm bis 855 nm und/oder von 935 nm bis 945 nm, aus einer oder mehreren Beleuchtungsrichtungen (7a).

9. Verfahren nach Anspruch 8, wobei mindestens eine der Beleuchtungsrichtungen (7a) mit der Auflageebene (17a) einen Winkel (7b) einschließt, der kleiner als 30° ist und insbesondere in einem Bereich von 10° bis 20°, beispielsweise bei ca. 15°, liegt, und die mindestens eine der Beleuchtungsrichtungen (7a) in die Auflageebene (17a) projiziert mit einer Hauptstreckungsrichtung (13a) der Auflagesteg (13) einen Winkel (7c) einschließt, der kleiner als 30° ist und insbesondere in einem Bereich von 10° bis 25°, beispielsweise bei ca. 15°, liegt.

10. Verfahren nach einem der Ansprüche 4 bis 9, wobei das Erzeugen (110') des zweidimensionalen Kamerabildes (21) oder das Erzeugen (110") des zweidimensionalen Dunkelfeld-Kamerabildes (23) umfasst:

- Aufnehmen mehrerer Teilkamerabilder, die jeweils einen Teilbereich der Palette (3) zweidimensional darstellen, und
- Zusammensetzen der Teilkamerabilder zu dem zweidimensionalen Kamerabild (21) oder dem zweidimensionalen Dunkelfeld-Kamerabild (23') der Palette (3).

11. Verfahren nach einem der vorhergehenden Ansprüche, wobei das Bestimmen (200) der Längsposition im Kontrastbilddatensatz (23, 23') umfasst:

- Durchführen einer Template-Matching-Bildanalyse unter Verwendung eines Templates (25), das als ein Bilddatensatz eines eine Mehrzahl von Auflagestegspitzen (17) aufweisenden Auflagestegs (13), insbesondere eines in einem Innenbereich der Palette (3) angeordneten Auflagestegs (13), ausgebildet ist.

12. Verfahren nach einem der vorhergehenden Ansprüche, wobei das Bestimmen (200) der Längsposition im Kontrastbilddatensatz (23, 23') umfasst:

- Summieren der Pixelwerte der Bildpixel des Kontrastbilddatensatzes (23, 23') reihenweise entsprechend der Haupterstreckungsrichtung (13a) und Ausgeben einer ersten Verteilung von ersten Pixelwertsummen und
- Bestimmen eines lokalen Extremums in der ersten Verteilung und Ausgeben der Reihe des lokalen Extremums als Längsposition.

13. Verfahren nach Anspruch 12, ferner mit:

- Summieren der Pixelwerte der Bildpixel des Kontrastbilddatensatzes (23, 23') spaltenweise entsprechend der Längsrichtung (13a) im Bereich des lokalen Extremums und Ausgeben einer zweiten Verteilung von zweiten Pixelwertsummen,
- Bestimmen mehrerer lokaler Extrema in der zweiten Verteilung und Ausgeben der Spalten der lokalen Extrema und
- Bestimmen (200) von Bildpositionen der den Auflagestegspitzen (17) zugeordneten Bereiche im Kontrastbilddatensatz (23, 23') anhand der entsprechenden Reihe des bestimmten lokalen Extremums und den Spalten der bestimmten lokalen Extrema.

14. Verfahren nach einem der vorhergehenden Ansprüche, wobei

die Auflagestege (13) an vorgegebenen Einhängepositionen (15) an einer Längsseite (3a) der Palette (3) einhängbar sind und sich die Haupterstreckungsrichtung (13a) quer zur Längsseite (3a) erstreckt und
die Palette (3) eine Referenzstruktur (19a) aufweist, die im Kontrastbilddatensatz (23, 23') als Referenzpixelanordnung (19b) identifizierbar ist, und wobei
das Ableiten (300) der Einhängeposition (15) des Auflagestegs (13) in der Palette (3) erfolgt, indem im Kontrastbilddatensatz (23, 23') ein Abstand zwischen der Referenzpixelanordnung (19b) und der Längsposition quer zur Haupterstreckungsrichtung (13a) ermittelt wird und basierend auf dem ermittelten Abstand eine der vorgegebenen Einhängepositionen (15) für die Längsposition identifiziert wird.

15. Verfahren nach einem der vorhergehenden Ansprüche, wobei der Pixelwert ein Grauwert, ein Farbwert oder ein Helligkeitswert ist.

16. Flachbettwerkzeugmaschine (1), insbesondere Laserschneid- oder Plasmaschneid-Flachbettwerkzeugmaschine, mit:

einer Palette (3) mit mehreren an Einhängepositionen (15) eingehängten Auflagestegen (13), wobei jeder der Auflagestege (13) eine Mehrzahl von Auflagestegspitzen (17) aufweist, die eine Auflageebene (17a) definieren,
einer Kamera (5) zum Erzeugen eines zweidimensionalen Kamerabildes (21) oder eines zweidimensionalen Dunkelfeldkamerabildes der Palette und
einer Auswertevorrichtung (11),
**dadurch gekennzeichnet, dass** die Kamera (5) und/oder die Auswertevorrichtung (11) ausgebildet sind für ein

- Erstellen (100) eines zweidimensionalen, eine Mehrzahl von Bildpixel aufweisenden Kontrastbilddatensatzes (23, 23') der Palette (3), wobei jedem Bildpixel ein Pixelwert und eine Pixelflächeneinheit der Auflageebene (17a) zugeordnet ist und der Kontrastbilddatensatz (23, 23') Bereiche, die den Auflagestegspitzen (17) zugeordnet sind, als lokale Pixelwert-Extrema (23a) in einem einheitlichen Pixelwert-Untergrund (23b) umfasst,

und die Auswertevorrichtung (11) ausgebildet ist für ein

- Bestimmen (200) einer Längsposition im Kontrastbilddatensatz (23, 23') von denjenigen Bereichen, die den Auflagestegspitzen (17) eines der Mehrzahl von Auflagestegen (13) zugeordnet sind, unter Verwendung der lokalen Pixelwert-Extrema (23a) und
- Ableiten (300) der Einhängeposition (15) des Auflagestegs (13) in der Palette (3) anhand der Längsposition im Kontrastbilddatensatz (23) und einem Ausmaß der Pixelflächeneinheit in der Längsrichtung (x).

17. Flachbettwerkzeugmaschine (1) nach Anspruch 16, wobei die Kamera (5) eingerichtet ist,

- das zweidimensionales Kamerabild (21) der Palette im sichtbaren oder infraroten Spektrum zu erzeugen, wobei das Kamerabild (21) in Reihen und Spalten angeordnete Bildpixel aufweist, denen jeweils eine Pixelflächeneinheit der Auflageebene (17a) zugeordnet ist, oder
- einen Kontrastbilddatensatz (23') durch Aufnehmen des zweidimensionalen Dunkelfeld-Kamerabildes der Palette (3) im Nah-Infrarot-Frequenzspektrum

aus einer Aufnahmerichtung (5a) zu erzeugen.

18. Flachbettwerkzeugmaschine (1) nach Anspruch 17, wobei die Auswertevorrichtung (11) dazu ausgebildet ist, ein Verfahren nach einem der vorhergehenden Ansprüche auszuführen und/oder einen Prozessor (9) umfasst, der eingerichtet ist

    - das Kamerabild (21) in einen Frequenzraum zu Fourier-transformieren und einen Transformationsfrequenzdatensatz (21a) auszugeben,
    - den Transformationsfrequenzdatensatz (21a) zur Hervorhebung von Frequenzen im Frequenzraum, die zu den Bereichen gehören, die den Auflagestegspitzen (17) zugeordnet sind, zu filtern und
    - den gefilterten Transformationsfrequenzdatensatz mittels inverser Fourier-Transformation rückzutransformieren und den rücktransformierten Bilddatensatz als den Kontrastbilddatensatz (23) auszugeben.

19. Flachbettwerkzeugmaschine (1) nach einem der Ansprüche 16 bis 18, ferner mit mindestens einer Beleuchtungseinrichtung (7), die zum Beleuchten der Palette (3) mit Licht eines Nah-Infrarot-Frequenzspektrums aus einer Beleuchtungsrichtungen (7a) eingerichtet ist, und wobei optional mindestens eine der Beleuchtungsrichtungen (7a) mit der Auflageebene (17a) einen Winkel (7b) einschließt, der kleiner als 30° ist und insbesondere in einem Bereich von 10° bis 20°, beispielsweise bei ca. 15°, liegt, und die mindestens eine der Beleuchtungsrichtungen (7a) in die Auflageebene (17a) projiziert mit einer Haupterstreckungsrichtung des Auflagestegs einen Winkel (7c) einschließt, der kleiner als 30° ist und insbesondere in einem Bereich von 10° bis 25°, beispielsweise bei ca. 15°, liegt.

**Claims**

1. A method for detecting a suspension position (15) of a support bar (13) in a pallet (3) which is fitted with a plurality of support bars (13) along a longitudinal direction (x), the pallet being used together with a flatbed machine tool (1), in particular a laser-cutting or plasma-cutting flatbed machine tool, wherein each of the support bars (13) has a plurality of support bar tips (17) along a main direction of extension (13a) aligned laterally relative to the longitudinal direction of a pallet (3), and the support bar tips (17) of the plurality of support bars (13) define a support plane (17a), **characterized by** the steps:

    - creating (100) a two-dimensional contrast-image dataset (23, 23') of the pallet (3), wherein a pixel value and a pixel area unit of the support plane (17a) is assigned to each image pixel, and the contrast-image dataset (23, 23') comprises regions that are assigned to the support bar tips (17) as local pixel-value extremes (23a) in a uniform pixel-value background (23b),
    - determining (200) a longitudinal position in the contrast-image dataset (23, 23') of regions that are assigned to the support bar tips (17) of one of the plurality of support bars (13) using the local pixel-value extremes (23a) and
    - deriving (300) the suspension position (15) of the support bar (13) in the pallet (3) on the basis of the longitudinal position in the contrast-image dataset (23) and an extent of the pixel area unit in the longitudinal direction (x).

2. The method according to claim 1, wherein one of the regions assigned to the support bar tips (17) is assigned to a support bar tip (17) and/or to a flank leading to the support bar tip (17).

3. The method according to one of the preceding claims, wherein the uniform pixel-value background (23b) does not represent a structure and/or comprises image pixels that have a constant pixel value or a random pixel-value distribution about a constant pixel value.

4. The method according to one of the preceding claims, wherein the creation (100) of the contrast-image data set (23, 23') of the pallet (3) also comprises:

    - creating (110') a two-dimensional camera image (21) of the pallet (3) in the visible or infrared spectrum, wherein the camera image (21) has the image pixels arranged in rows and columns, one each of the pixel-area units of the support plane (17a) being assigned to said image pixels, respectively,
    - Fourier transforming (120') the camera image (21) into a frequency domain and outputting a transformation-frequency dataset (21a),
    - filtering (130') the transformation-frequency dataset (21a) in order to emphasize frequencies in the frequency domain that belong to the regions that are assigned to the support bar tips (17), and
    - back-transforming (140') the filtered transformation-frequency dataset into a back-transformed image dataset using an inverse Fourier transformation and outputting the back-transformed image dataset as the contrast-image dataset (23).

5. The method according to claim 4, wherein adjacent support bar tips (17) in the main direction of extension (13a) have substantially the same tip spacing (17b) from one another, and wherein the filtering (130') of the transformation-frequency dataset (21a) comprises:

- identifying a frequency band assigned to the tip spacing (17b) in the frequency domain, wherein the frequency band is formed around a tip repetition frequency assigned to the main direction of extension and is obtained from:

$$\frac{h^* \Delta x}{d},$$

where

h: is a number of pixels of the region of the support plane (17a) in the main direction of extension (13a) that is represented in the camera image (21),
Δx: is the extent of the pixel area unit in the main direction of extension (13a) and
d: is the tip spacing (17b) of adjacent support bar tips (17), and

- restricting the transformation-frequency dataset (21a) to the frequency band.

6. The method according to claim 4 or 5, wherein the creating (110") of the two-dimensional camera image (21) is accomplished by creating a dark-field camera image of the pallet (3) in the near-infrared frequency spectrum, and wherein the dark-field camera image is recorded from a recording direction (5a) that forms an angle (5b) with the support plane (17a), the angle lying in the range from 10° to 70°, in particular greater than 45°, for example 60°, and extends at an angle in a range from 70° to 110°, in particular that is perpendicular to the main direction of extension.

7. The method according to one of claims 1 to 3, wherein the creation (100) of the contrast-image dataset (23) of the pallet (3) further comprises:

- creating (110") the contrast-image dataset (23) by creating a dark-field camera image of the pallet (3) in the near-infrared frequency spectrum from a recording direction (5a) that forms an angle (5b) with the support plane (17a), the angle lying in the range from 10° to 70°, in particular greater than 45°, for example 60°, and extends at an angle in a range from 70° to 110°, in particular that is perpendicular to the main direction of extension.

8. The method according to one of the preceding claims, wherein the creation (100) of the contrast-image dataset (23) of the pallet (3) further comprises:

- illuminating (105") the pallet (3) from above with light of a near-infrared frequency spectrum, in particular in the frequency spectrum from 845 nm to 855 nm and/or from 935 nm to 945 nm, from one or more illumination directions (7a).

9. The method according to claim 8, wherein at least one of the illumination directions (7a) forms an angle (7b) with the support plane (17a) which is less than 30° and in particular lies in a range from 10° to 20°, for example approximately 15°, and the at least one of the illumination directions (7a), when projected into the support plane (17a), forms an angle (7c) with a main direction of extension (13a) of the support bar (13), the angle being less than 30° and lying in a range from 10° to 25° in particular, for example approximately 15°.

10. The method according to one of claims 4 to 9, wherein the creating (110') of the two-dimensional camera image (21) or the creating (110") of the two-dimensional dark-field camera image (23) comprises:

- recording a plurality of partial camera images, each of which two-dimensionally represent a partial region of the pallet (3), and
- putting the partial camera images together to form the two-dimensional camera image (21) or the two-dimensional dark-field camera image (23') of the pallet (3).

11. The method according to one of the preceding claims, wherein the determining (200) of the longitudinal position in the contrast-image dataset (23, 23') comprises:

- carrying out a template-matching image analysis using a template (25) formed as an image dataset of a support bar (13) that has a plurality of support bar tips (17), in particular a support bar (13) arranged in an inner region of the pallet (3).

12. The method according to one of the preceding claims, wherein the determining (200) of the longitudinal position in the contrast-image dataset (23, 23') comprises:

- totalizing the pixel values of the image pixels of the contrast-image dataset (23, 23') row-by-row corresponding to the main direction of extension (13a), and outputting a first distribution of first pixel-value sums; and
- determining a local extreme in the first distribution, and outputting the row of the local extreme as a longitudinal position.

13. The method according to claim 12, further comprising:

- totalizing the pixel valves of the image pixels of the contrast-image dataset (23, 23') column-by-column corresponding to the longitudinal direction (13a) in the region of the local extreme, and outputting a second distribution of second pixel-value sums,
- determining a plurality of local extremes in the second distribution and outputting the columns of the local extremes and
- determining (200) image positions of the regions in the contrast-image dataset (23, 23') that are assigned to the support bar tips (17) on the basis of the corresponding row of the determined local extreme and the columns of the determined local extremes.

14. The method according to one of the preceding claims, wherein

the support bars (13) can be suspended at predetermined suspension positions (15) on a longitudinal side (3a) of the pallet (3), and the main direction of extension (13a) extends transversely relative to the longitudinal side (3a) and the pallet (3) has a reference structure (19a) which is identifiable in the contrast-image dataset (23, 23') as a reference pixel arrangement (19b), and wherein

the derivation (300) of the suspension position (15) of the support bar (13) in the pallet (3) is accomplished by determining a distance between the reference pixel arrangement (19b) and the longitudinal position transverse to the main direction of extension (13a) in the contrast-image dataset (23, 23') and, on the basis of the distance determined, identifying one of the predetermined suspension positions (15) for the longitudinal position.

15. The method according to one of the preceding claims, wherein the pixel value is a gray value, a color value, or a brightness value.

16. A flatbed machine tool (1), in particular a laser-cutting or plasma-cutting flatbed machine tool, comprising:

a pallet (3) with a plurality of multiple support bars (13) suspended at suspension positions (15), wherein each of the support bars (13) has a plurality of support bar tips (17) that define a support plane (17a), a camera (5) configured to create a two-dimensional camera image (21) or a two-dimensional dark-field camera image of the pallet and an evaluation device (11),

**characterized in that** the camera (5) and/or the evaluation device (11) are configured for

- creating (100) a two-dimensional contrast-image dataset (23, 23') of the pallet (3), the dataset having a plurality of image pixels, wherein a pixel value and a pixel area unit of the support plane (17a) is assigned to each image pixel, and the contrast-image dataset (23, 23') comprises regions that are assigned to the support bar tips (17) as local pixel-value extremes (23a) in a uniform pixel-value background (23b),

and the evaluation device (11) is configured for

- determining (200) a longitudinal position in the contrast-image dataset (23, 23') of regions that are assigned to the support bar tips (17) of one of the plurality of support bars (13) using the local pixel-value extremes (23a) and
- deriving (300) the suspension position (15) of the support bar (13) in the pallet (3) on the basis of the longitudinal position in the contrast-image dataset (23) and an extent of the pixel area unit in the longitudinal direction (x).

17. The flatbed machine tool (1) according to claim 16, wherein the camera (5) is configured,

- to create the two-dimensional camera image (21) of the pallet in the visible or infrared spectrum, wherein the camera image (21) has image pixels arranged in rows and columns, one each of the pixel-area units of the support plane (17a) being assigned to said image pixels, respectively, or
- to create a contrast-image dataset (23') by recording the two-dimensional dark-field camera image of the pallet (3) in the near-infrared frequency spectrum from a recording direction (5a).

18. The flatbed machine tool (1) according to claim 17, wherein the evaluation device (11) is configured to carry out a method according to one of the preceding claims and/or comprises a processor (9) which is configured

- to Fourier transform the camera image (21) into a frequency domain and to output a transformation-frequency dataset (21a),
- to filter the transformation-frequency dataset (21a) in order to emphasize frequencies in the frequency domain that belong to the regions which are assigned to the support bar tips (17), and

- to back-transform the filtered transformation-frequency dataset into a using an inverse Fourier transformation and output the back-transformed image dataset as the contrast-image dataset (23).

19. The flatbed machine tool (1) according to one of claims 16 to 18, further comprising at least one illumination device (7) configured to illuminate the pallet (3) with light of a near-infrared frequency spectrum from one illumination directions (7a) and wherein optionally at least one of the illumination directions (7a) forms an angle (7b) with the support plane (17a) which is less than 30° and in particular lies in a range from 10° to 20°, for example approximately 15°, and the at least one of the illumination directions (7a), when projected into the support plane (17a), forms an angle (7c) with a main direction of extension of the support bar, the angle being less than 30° and lying in a range from 10° to 25° in particular, for example approximately 15°.

## Revendications

1. Procédé de détection d'une position d'accrochage (15) d'une barre d'appui (13) dans une palette (3) équipée d'une pluralité de barres d'appui (13) le long d'une direction longitudinale (x) pour être utilisée avec une machine-outil à banc plat (1), en particulier une machine-outil à banc plat de découpe au laser ou de découpe au plasma, dans lequel chacune des barres d'appui (13) présente plusieurs pointes de barre d'appui (17) le long d'une direction d'extension principale (13a) orientée transversalement à la direction longitudinale d'une palette (3), et dans lequel les pointes de barre d'appui (17) de la pluralité de barres d'appui (13) définissent un plan d'appui (17a), **caractérisé par** les étapes de :

   - la création (100) d'un ensemble de données d'image de contraste (23, 23') bidimensionnel de la palette (3), présentant une pluralité de pixels d'image, dans lequel à chaque pixel d'image est associée une valeur de pixel et une unité de surface de pixel du plan d'appui (17a) et dans lequel l'ensemble de données d'image de contraste (23, 23') comprend des zones associées aux pointes de barre d'appui (17) en tant qu'extrema de valeur de pixel locaux (23a) dans un support de valeur de pixel (23b) uniforme,
   - la détermination (200) d'une position longitudinale dans l'ensemble de données d'image de contraste (23, 23') de ces zones qui sont associées aux pointes de barre d'appui (17) de l'une de la pluralité de barres d'appui (13), en utilisant les extrema de valeur de pixel locaux (23a), et

   - la déduction (300) de la position d'accrochage (15) de la barre d'appui (13) dans la palette (3) à partir de la position longitudinale dans l'ensemble de données d'image de contraste (23) et d'une étendue de l'unité de surface de pixel dans la direction longitudinale (x).

2. Procédé selon la revendication 1, dans lequel l'une des zones associées aux pointes de barre d'appui (17) est associée à une pointe de barre d'appui (17) et/ou à un flanc menant à la pointe de barre d'appui (17).

3. Procédé selon l'une quelconque des revendications précédentes, dans lequel le support de valeur de pixel (23b) uniforme ne représente pas une structure et/ou comprend des pixels d'image présentant une valeur de pixel constante ou une distribution de valeur de pixel aléatoire autour d'une valeur de pixel constante.

4. Procédé selon l'une quelconque des revendications précédentes, dans lequel la création (100) de l'ensemble de données d'image de contraste (23, 23') de la palette (3) comprend en outre :

   - la génération (110') d'une image de caméra (21) bidimensionnelle de la palette (3) dans le spectre visible et/ou infrarouge, dans lequel l'image de caméra (21) présente les pixels d'image disposés en rangées et en colonnes, auxquels est respectivement associée l'unité de surface de pixel du plan d'appui (17a),
   - la transformation de Fourier (120') de l'image de caméra (21) en un espace de fréquence et la sortie d'un ensemble de données de fréquence de transformation (21a),
   - le filtrage (130') de l'ensemble de données de fréquence de transformation (21a) pour mettre en évidence des fréquences dans l'espace de fréquence appartenant aux zones associées aux pointes de barre d'appui (17), et
   - la transformation inverse (140') de l'ensemble de données de fréquence de transformation filtré au moyen d'une transformation de Fourier inverse en un ensemble de données d'image transformé en retour et la sortie de l'ensemble de données d'image inversement transformé en tant que l'ensemble de données d'image de contraste (23).

5. Procédé selon la revendication 4, dans lequel des pointes de barre d'appui (17) adjacentes dans la direction d'extension principale (13a) présentent un espacement de pointe (17b) sensiblement égal entre elles, et dans lequel le filtrage (130') de l'ensemble de données de fréquence de transformation (21a) comprend :

- l'identification d'une bande de fréquence associée à l'espacement de pointe (17b) dans l'espace de fréquence, dans lequel la bande de fréquence est en particulier conçu autour d'une fréquence de répétition de pointe qui est associée à la direction d'extension principale et qui résulte en particulier de :

$$\frac{h^* \Delta x}{d},$$

avec

h : nombre de pixels de la zone du plan d'appui (17a) représentée dans l'image de caméra (21) dans la direction d'extension principale (13a),

$\Delta x$: étendue de l'unité de surface de pixel dans la direction d'extension principale (13a) ; et

d: espacement de pointe (17b) de pointes de barre d'appui (17) adjacentes, et

- la restriction de l'ensemble de données de fréquence de transformation (21a) à la bande de fréquence.

6. Procédé selon la revendication 4 ou 5, dans lequel la génération (110") de l'image de caméra (21) bidimensionnelle s'effectue par génération d'une image de caméra à fond noir de la palette (3) dans le spectre de fréquence proche infrarouge et dans lequel l'image de caméra à fond noir est prise à partir d'une direction de prise de vue (5a) formant avec le plan d'appui (17a) un angle (5b) compris dans une plage de 10° à 70°, en particulier supérieur à 45°, par exemple 60°, et qui s'étend sous un angle compris dans une plage de 70° à 110°, en particulier perpendiculairement à la direction d'extension principale.

7. Procédé selon les revendications 1 à 3, dans lequel la création (100) de l'ensemble de données d'image de contraste (23) de la palette (3) comprend en outre :

- la génération (110") de l'ensemble de données d'image de contraste (23) par génération d'une image de caméra à fond noir de la palette (3) dans le spectre de fréquence proche infrarouge à partir d'une direction de prise de vue (5a) formant avec le plan d'appui (17a) un angle (5b) compris dans une plage de 10° à 70°, en particulier supérieur à 45°, par exemple 60°, et qui s'étend sous un angle compris dans une plage de 70° à 110°, en particulier perpendiculairement à la direction d'extension principale.

8. Procédé selon l'une quelconque des revendications précédentes, dans lequel la création (100) de l'ensemble de données d'image de contraste (23) de la palette (3) comprend en outre :

- l'éclairage (105") de la palette (3) par le haut avec de la lumière d'un spectre de fréquence proche infrarouge, en particulier dans le spectre de fréquence de 845 nm à 855 nm et/ou de 935 nm à 945 nm, depuis une ou plusieurs directions d'éclairage (7a).

9. Procédé selon la revendication 8, dans lequel au moins l'une des directions d'éclairage (7a) forme avec le plan d'appui (17a) un angle (7b) inférieur à 30° et en particulier compris dans une plage de 10° à 20°, par exemple d'environ 15°, et dans lequel l'au moins une des directions d'éclairage (7a) projetée dans le plan d'appui (17a) forme avec une direction d'extension principale (13a) de la barre d'appui (13) un angle (7c) inférieur à 30° et en particulier compris dans une plage de 10° à 25°, par exemple à environ 15°.

10. Procédé selon l'une quelconque des revendications 4 à 9, dans lequel la génération (110') de l'image de caméra (21) bidimensionnelle ou la génération (110") de l'image de caméra à fond noir (23) bidimensionnelle comprend :

- la prise de plusieurs images de caméra partielles représentant chacune une zone partielle de la palette (3) en deux dimensions, et
- l'assemblage des images de caméra partielles en l'image de caméra (21) bidimensionnelle ou l'image de caméra à fond noir (23') bidimensionnelle de la palette (3).

11. Procédé selon l'une quelconque des revendications précédentes, dans lequel la détermination (200) de la position longitudinale dans l'ensemble de données d'image de contraste (23, 23') comprend :

- la réalisation d'une analyse d'image de correspondance de modèle en utilisant un modèle (25) conçu comme un ensemble de données d'image d'une barre d'appui (13) présentant une pluralité de pointes de barre d'appui (17), en particulier une barre d'appui (13) disposée dans une zone intérieure de la palette (3).

12. Procédé selon l'une quelconque des revendications précédentes, dans lequel la détermination (200) de la position longitudinale dans l'ensemble de données d'image de contraste (23, 23') comprend :

- l'addition des valeurs de pixel des pixels d'image de l'ensemble de données d'image de contraste (23, 23'), par rangée, selon la direction d'extension principale (13a) et la sortie d'une première distribution de premières sommes de valeurs de pixel ; et

- la détermination d'un extremum local dans la première distribution et la sortie de la rangée de l'extremum local en tant que position longitudinale.

13. Procédé selon la revendication 12, comprenant en outre :

- l'addition des valeurs de pixel des pixels d'image de l'ensemble de données d'image de contraste (23, 23') par colonne correspondant à la direction longitudinale (13a) dans la zone de l'extremum local et la sortie d'une deuxième distribution de deuxièmes sommes de valeurs de pixel,
- la détermination de plusieurs extrema locaux dans la deuxième distribution et la sortie des colonnes des extrema locaux ; et
- la détermination (200) de positions d'image des zones associées aux pointes de barre d'appui (17) dans l'ensemble de données d'image de contraste (23, 23') à l'aide de la rangée correspondante de l'extremum local déterminé et des colonnes des extrema locaux déterminés.

14. Procédé selon l'une quelconques des revendications précédentes, dans lequel

les barres d'appui (13) sont accrochables à des positions d'accrochage (15) prédéfinies sur un côté longitudinal (3a) de la palette (3) et dans lequel la direction d'extension principale (13a) s'étend transversalement au côté longitudinal (3a) et

la palette (3) présente une structure de référence (19a) identifiable dans l'ensemble de données d'image de contraste (23, 23') en tant qu'agencement de pixels de référence (19b), et dans lequel

la déduction (300) de la position d'accrochage (15) de la barre d'appui (13) dans la palette (3) s'effectue en déterminant, dans l'ensemble de données d'image de contraste (23, 23'), un espacement entre l'agencement de pixels de référence (19b) et la position longitudinale transversalement à la direction d'extension principale (13a) et en identifiant, sur la base de l'espacement déterminé, l'une des positions d'accrochage (15) prédéfinies pour la position longitudinale.

15. Procédé selon l'une quelconque des revendications précédentes, dans lequel la valeur de pixel est une valeur de gris, une valeur de couleur ou une valeur de luminosité.

16. Machine-outil à banc plat (1), en particulier machine-outil à banc plat de découpe au laser ou de découpe au plasma, avec :

une palette (3) avec plusieurs barres d'appui (13) accrochées à des positions d'accrochage (15), dans lequel chacune des barres d'appui (13) présente une pluralité de pointes de barre d'appui (17) définissant un plan d'appui (17a), une caméra (5) pour la génération d'une image de caméra (21) bidimensionnelle ou d'une image de caméra à fond noir bidimensionnelle de la palette et

un dispositif d'évaluation (11),

**caractérisée en ce que** la caméra (5) et/ou le dispositif d'évaluation (11) sont conçus pour

- la création (100) d'un ensemble de données d'image de contraste (23, 23') bidimensionnel de la palette (3), présentant une pluralité de pixels d'image, dans lequel à chaque pixel d'image est associée une valeur de pixel et une unité de surface de pixel du plan d'appui (17a) et dans lequel l'ensemble de données d'image de contraste (23, 23') comprend des zones associées aux pointes de barre d'appui (17) en tant qu'extrema de valeur de pixel locaux (23a) dans un support de valeur de pixel (23b) uniforme,

et **en ce que** le dispositif d'évaluation (11) est conçu pour

- la détermination (200) d'une position longitudinale dans l'ensemble de données d'image de contraste (23, 23') de ces zones qui sont associées aux pointes de barre d'appui (17) de l'une de la pluralité de barres d'appui (13), en utilisant les extrema de valeur de pixel locaux (23a), et
- la déduction (300) de la position d'accrochage (15) de la barre d'appui (13) dans la palette (3) à partir de la position longitudinale dans l'ensemble de données d'image de contraste (23) et d'une étendue de l'unité de surface de pixel dans la direction longitudinale (x).

17. Machine-outil à banc plat (1) selon la revendication 16, dans laquelle la caméra (5) est aménagée pour

- générer une image de caméra (21) bidimensionnelle de la palette dans le spectre visible ou infrarouge, dans lequel l'image de caméra (21) présente des pixels d'image disposés en rangées et en colonnes, auxquels est respectivement associée une unité de surface de pixel du plan d'appui (17a), ou
- générer un ensemble de données d'image de contraste (23') en enregistrant l'image de caméra à fond noir bidimensionnelle de la palette (3) dans le spectre de fréquence proche infrarouge à partir d'une direction de prise de vue (5a).

18. Machine-outil à banc plat (1) selon la revendication 17, dans laquelle le dispositif d'évaluation (11) est conçu pour exécuter un procédé selon l'une des revendications précédentes et/ou comprend un processeur (9) aménagé pour

    - transformer par transformation de Fourier l'image de caméra (21) dans un espace de fréquence et pour sortir un ensemble de données de fréquence de transformation (21a),
    - filtrer l'ensemble de données de fréquence de transformation (21a) pour mettre en évidence des fréquences dans l'espace de fréquence appartenant aux zones associées aux pointes de barre d'appui (17), et
    - transformer inversement l'ensemble de données de fréquence de transformation filtré au moyen d'une transformation de Fourier inverse et sortir l'ensemble de données d'image transformé inversement en tant que l'ensemble de données d'image de contraste (23).

19. Machine-outil à banc plat (1) selon l'une quelconque des revendications 16 à 18, avec en outre au moins un dispositif d'éclairage (7) aménagé pour l'éclairage de la palette (3) avec de la lumière d'un spectre de fréquence proche infrarouge depuis des directions d'éclairage (7a), et dans lequel optionnellement au moins l'une des directions d'éclairage (7a) forme avec le plan d'appui (17a) un angle (7b) inférieur à 30° et en particulier compris dans une plage de 10° à 20°, par exemple d'environ 15°, et dans lequel l'au moins une des directions d'éclairage (7a) projetée dans le plan d'appui (17a) forme avec une direction d'extension principale de la barre d'appui un angle (7c) inférieur à 30° et en particulier compris dans une plage de 10° à 25°, par exemple à environ 15°.

# FIG 1

## FIG 2

## FIG 3

FIG 4

FIG 5

23

21

23b 23a

13 17

FIG 6

100

110'

120'

130'

140'

FIG 7

FIG 8

FIG 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 202020101810 U1
- CN 204867817 U
- EP 3338946 A1


### In der Beschreibung aufgeführte Nicht-Patentliteratur

- **F. STRUCKMEIER et al.** Measuring the supporting slats of laser cutting machines using laser triangulation. *THE INTERNATIONAL JOURNAL OF ADVANCED MANUFACTURING TECHNOLOGY*, vol. 1,16
- **G. CHENG** ; **J. HAN**. A survey on object detection in optical remote sensing images. *ISPRS Journal of Photogrammetry and Remote Sensing*, 2016, vol. 117, 11-28
- **P. DU et al.** Improved peak detection in mass spectrum by incorporating continuous wavelet transform-based pattern matching. *Bioinformatics*, 2006, vol. 22 (17), 2059-2065
- **M. BARVA et al.** Parallel integral projection transform for straight electrode localization in 3-D ultrasound images. *IEEE transactions on ultrasonics, ferroelectrics, and frequency control*, 2008, vol. 55 (7), 1559-1569
- **D. G. LOWE**. Object recognition from local scaleinvariant features. *IEEE International Conference on Computer Vision*, 1999, vol. 99 (2), 1150-1157
- **D. ERHAN et al.** Scalable object detection using deep neural networks. *IEEE Conference on Computer Vision and Pattern Recognition*, 2014, 2147-2154
- **K. HE et al.** Mask r-cnn. *Proceedings of the IEEE International Conference on Computer Vision*, 2017, 2961-2969